# EUROPEAN PATENT SPECIFICATION

(11) **EP 4 387 364 B1**
(45) Date of publication and mention of the grant of the patent: **02.09.2026**
(21) Application number: 24154386.7
(22) Date of filing: 26.11.2021
(51) Int. Cl.: H04W 76/14, H04W 72/20

(54) **SYSTEMS AND METHODS FOR MAC CE BASED INTER-DEVICE COORDINATION OF SIDELINK TRANSMISSIONS**
SYSTEME UND VERFAHREN ZUR MAC-CE-BASIERTEN KOORDINATION ZWISCHEN VORRICHTUNGEN VON SIDELINK-ÜBERTRAGUNGEN
SYSTÈMES ET PROCÉDÉS DE COORDINATION DE TRANSMISSIONS DE LIAISON LATÉRALE ENTRE DES DISPOSITIFS SUR LA BASE D'UN MAC CE

(30) Priority: 11.12.2020 WO PCT/EP2020/085763
(43) Date of publication of application: 19.06.2024
(62) Document number(s) of the earlier application(s) in accordance with Art. 76 EPC: 21820241.4 / 4 218 352
(73) Proprietor: Telefonaktiebolaget LM Ericsson (publ), 164 83 Stockholm (SE)
(72) Inventor: WANG, Min, 977 53 Luleå (SE)
(74) Representative: Ericsson

(56) References cited:
- EP-A1- 3 537 841
- CATT: "Discussion on Sidelink BSR", vol. RAN WG2, no. Bratislava, Slovakia; 20150420 - 20150424, 10 April 2015 (2015-04-10), XP050953068, Retrieved from the Internet <URL:http://www.3gpp.org/ftp/tsg_ran/WG2_RL2/TSGR2_89bis/Docs/> [retrieved on 20150410]
- QUALCOMM INCORPORATED: "Sidelink resource allocation and configuration for bi-directional UE-to- NW relaying", vol. RAN WG1, no. Prague, Czech Republic; 20170521 - 20170525, 20 August 2017 (2017-08-20), XP051315849, Retrieved from the Internet <URL:http://www.3gpp.org/ftp/Meetings_3GPP_SYNC/RAN1/Docs/> [retrieved on 20170820]

## Description

### Technical Field

The present disclosure relates to sidelink communication in a cellular communication system.

### Background

### New Radio (NR) Frame Structure

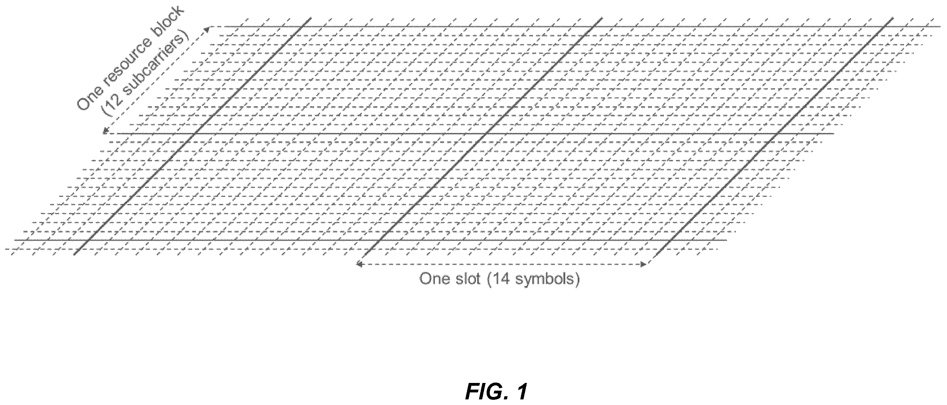

Similar to Long Term Evolution (LTE), Third Generation Partnership Project (3GPP) New Radio (NR) uses Orthogonal Frequency Division Multiplexing (OFDM) in the downlink (i.e. from a network node, gNB, eNB, or base station, to a user equipment or UE). The basic NR physical resource over an antenna port can thus be seen as a time-frequency grid as illustrated in Figure 1, where a resource block (RB) in a 14-symbol slot is shown. A resource block corresponds to twelve (12) contiguous subcarriers in the frequency domain. Resource blocks are numbered in the frequency domain, starting with 0 from one end of the system bandwidth. Each resource element corresponds to one OFDM subcarrier during one OFDM symbol interval.

Different subcarrier spacing values are supported in NR. The supported subcarrier spacing values (also referred to as different numerologies) are given by Δf=(15×2^µ) kilohertz (kHz) where µ ∈ (0,1,2,3,4). Δf=15 kHz is the basic (or reference) subcarrier spacing that is also used in LTE.

In the time domain, downlink and uplink transmissions in NR will be organized into equally-sized subframes of 1ms each similar to LTE. A subframe is further divided into multiple slots of equal duration. The slot length for subcarrier spacing Δf=(15×2^ µ) kHz is 1/2^ µ milliseconds (ms). There is only one slot per subframe for Δf=15kHz and a slot consists of 14 OFDM symbols.

Downlink transmissions are dynamically scheduled, i.e., in each slot the next generation NodeB (gNB) transmits downlink control information (DCI) about which User Equipment (UE) data is to be transmitted to and which resource blocks in the current downlink slot the data is transmitted on. This control information is typically transmitted in the first one or two OFDM symbols in each slot in NR. The control information is carried on the Physical Control Channel (PDCCH) and data is carried on the Physical Downlink Shared Channel (PDSCH). A UE first detects and decodes PDCCH and if a PDCCH is decoded successfully, it then decodes the corresponding PDSCH based on the downlink assignment provided by decoded control information in the PDCCH.

In addition to PDCCH and PDSCH, there are also other channels and reference signals transmitted in the downlink, including Synchronization Signal Block (SSB), Channel State Information Reference Signal (CSI-RS), etc.

Uplink data transmissions, carried on Physical Uplink Shared Channel (PUSCH), can also be dynamically scheduled by the gNB by transmitting a Downlink Control Information (DCI). The DCI (which is transmitted in the downlink (DL) region) always indicates a scheduling time offset so that the PUSCH is transmitted in a slot in the UL region.

### Sidelink Transmissions in NR

Sidelink transmissions over NR are specified for Release 16. These are enhancements of the ProSe (PROximity-based SErvices) specified for LTE. Four new enhancements are particularly introduced to NR sidelink transmissions as follows:
- Support for unicast and groupcast transmissions are added in NR sidelink. For unicast and groupcast, the physical sidelink feedback channel (PSFCH) is introduced for a receiver UE to reply the decoding status to a transmitter UE.
- Grant-free transmissions, which are adopted in NR uplink transmissions, are also provided in NR sidelink transmissions, to improve the latency performance.
- To alleviate resource collisions among different sidelink transmissions launched by different UEs, it enhances channel sensing and resource selection procedures, which also lead to a new design of PSCCH.
- To achieve a high connection density, congestion control and thus the QoS management is supported in NR sidelink transmissions.

To enable the above enhancements, new physical channels and reference signals are introduced in NR (available in LTE before):
- PSSCH (Physical Sidelink Shared Channel, SL version of PDSCH): The PSSCH is transmitted by a sidelink transmitter UE, which conveys sidelink transmission data, system information blocks (SIBs) for radio resource control (RRC) configuration, and a part of the sidelink control information (SCI).
- PSFCH (Physical Sidelink, SL version of PUCCH): The PSFCH is transmitted by a sidelink receiver UE for unicast and groupcast, which conveys 1 bit information over 1 RB for the Hybrid Automatic Repeat Request (HARQ) acknowledgement (ACK) and the negative ACK (NACK). In addition, channel state information (CSI) is carried in the medium access control (MAC) control element (CE) over the

PSSCH instead of the PSFCH.
- PSCCH (Physical Sidelink Common Control Channel, SL version of PDCCH): When the traffic to be sent to a receiver UE arrives at a transmitter UE, a transmitter UE should first send the PSCCH, which conveys a part of SCI (Sidelink Control information, SL version of DCI) to be decoded by any UE for the channel sensing purpose, including the reserved time-frequency resources for transmissions, demodulation reference signal (DMRS) pattern and antenna port, etc.
- Sidelink Primary/Secondary Synchronization Signal (S-PSS/S-SSS): Similar to downlink transmissions in NR, in sidelink transmissions, primary and secondary synchronization signals (called S-PSS and S-SSS, respectively) are supported. Through detecting the S-PSS and S-SSS, a UE is able to identify the sidelink synchronization identity (SSID) from the UE sending the S-PSS/S-SSS. Through detecting the S-PSS/S-SSS, a UE is therefore able to know the characteristics of the UE transmitter the S-PSS/S-SSS. A series of process of acquiring timing and frequency synchronization together with SSIDs of UEs is called initial cell search. Note that the UE sending the S-PSS/S-SSS may not be necessarily involved in sidelink transmissions, and a node (UE/eNB/gNB) sending the S-PSS/S-SSS is called a synchronization source. There are 2 S-PSS sequences and 336 S-SSS sequences forming a total of 672 SSIDs in a cell.
- Physical Sidelink Broadcast Channel (PSBCH): The PSBCH is transmitted along with the S-PSS/S-SSS as a synchronization signal/PSBCH block (SSB). The SSB has the same numerology as PSCCH/PSSCH on that carrier, and an SSB should be transmitted within the bandwidth of the configured BWP. The PSBCH conveys information related to synchronization, such as the direct frame number (DFN), indication of the slot and symbol level time resources for sidelink transmissions, in-coverage indicator, etc. The SSB is transmitted periodically at every 160 ms.
- DMRS, phase tracking reference signal (PT-RS), channel state information reference signal (CSIRS): These physical reference signals supported by NR downlink/uplink transmissions are also adopted by sidelink transmissions. Similarly, the PT-RS is only applicable for FR2 transmission.

A Qualcomm Incorporated 3GPP submission entitled "Sidelink resource allocation and configuration for bi-directional UE-to-NW relaying" (R1-1713040, Prague, Czech Republic, 21-25 May 2017) discusses relay assisted resource allocation.
EP 3537841 A1 discloses a resource scheduling method. The method comprises, inter alia, a first UE sending a second message to a second UE, wherein the second message includes first information allocated by the network server to the second UE, the first information indicating a data channel sidelink resource corresponding to the second UE.

### Summary

This summary is provided to introduce a selection of concepts in a simplified form that are further described below in the detailed description. This summary is not intended to identify key features or essential features of the claimed subject matter, nor is it intended to be used to limit the scope of the claimed subject matter. Aspects of the invention are set out in the independent claims appended hereto. Optional features are set out in the dependent claims.

The present disclosure proposes an improved solution for sidelink transmission. With the proposed MAC CE, the first wireless communication device is able to provide rich information related to inter-device coordination (e.g., of resources used for sidelink transmission) to the second wireless communication device. Using this information, the second wireless communication device can improve resource allocation to avoid resource collision. Therefore, inter-UE coordination is improved.

### Brief Description of the Drawings

The accompanying drawing figures incorporated in and forming a part of this specification illustrate several aspects of the disclosure, and together with the description serve to explain the principles of the disclosure.
Figure 1 illustrates a basic New Radio (NR) physical resource grid.
Figure 2 corresponds to Figure 6.3.2.2-1 (Summary of sensing and resource (re-)selection procedures) in TR 37.985 V 16.0.0.
Figure 3 corresponds to Figure 6.3.2.2-2(a) (Timeline of sensing and resource (re-)selection procedure triggered at time n, without re-evaluation before (m-T3)) in TR 37.985 V 16.0.0. Its first reserved resource is at time m in TR 37.985 V 16.0.0.
Figure 4 corresponds to Figure 6.3.2.2-2(b) (Timeline of sensing and resource (re-)selection procedure originally triggered at time n, which has a first reserved resource at time m, when re-evaluation occurring at m-T3 determines the resources are no longer selectable) in TR 37.985 V 16.0.0. The new re-evaluation cut-off becomes (m'-T3) in TR 37.985 V 16.0.0.
Figure 5 corresponds to Figure 6.1.6-1 (SL-SCH MAC subheader) in TS 38.321 V16.2.1.
Figure 6 corresponds to Figure 6.1.2-2 (Example of an SL MAC PDU) in TS 38.321 V 16.2.1.
Figure 7 illustrates an example of a cellular communications network.
Figure 8 illustrates an example of a MAC control element (CE) according to some embodiments of the present disclosure.
Figures 9A-9C illustrates operations of the cellular communication network of Figure 7 in accordance with some embodiments of the present disclosure.
Figure 10 is a schematic block diagram of a radio access node.
Figure 11 is a schematic block diagram that illustrates a virtualized embodiment of the radio access node of Figure 10.
Figure 12 is a schematic block diagram of the radio access node of Figure 10.
Figure 13 is a schematic block diagram of a wireless communication device according to some embodiments of the present disclosure.
Figures 14A and 14B are schematic block diagrams of the wireless communication device of Figure 13.
Figure 15 illustrates a telecommunication network connected via an intermediate network to a host computer;
Figure 16 is a generalized block diagram of a host computer communicating via a base station with a UE over a partially wireless connection;
Figure 17 is a flowchart illustrating a method implemented in a communication system;
Figure 18 is a flowchart illustrating a method implemented in a communication system;
Figure 19 is a flowchart illustrating a method implemented in a communication system; and
Figure 20 is a flowchart illustrating a method implemented in a communication system.

### Detailed Description

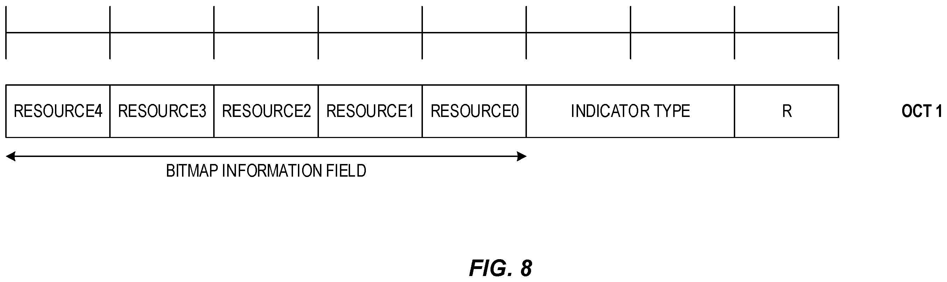

The invention is disclosed in figures 8, 9A-9C, 13 and corresponding paragraphs and restricted by the scope of the claims. The rest of the figures and corresponding paragraphs do not fall under the scope of the claims and they are disclosed as background information relevant to understand the invention

Radio Node: As used herein, a "radio node" is either a radio access node or a wireless communication device.

Radio Access Node: As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

Core Network Node: As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

Communication Device: As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

Wireless Communication Device: One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

Network Node: As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

Sidelink transmissions over NR includes a new feature: the two-stage sidelink control information (SCI). This is a version of the DCI for SL. Unlike the DCI, only part (first stage) of the SCI is sent on the PSCCH. This part is used for channel sensing purposes (including the reserved time-frequency resources for transmissions, demodulation reference signal (DMRS) pattern and antenna port, etc.) and can be read by all UEs while the remaining (second stage) scheduling and control information such as a 8-bits source identity (ID) and a 16-bits destination ID, NDI, RV and HARQ process ID is sent on the PSSCH to be decoded by the receiver UE.

Similar as for PRoSE in LTE, NR sidelink transmissions have the following two modes of resource allocations:
- Mode 1: Sidelink resources are scheduled by a gNB.
- Mode 2: The UE autonomously selects sidelink resources from a (pre-)configured sidelink resource pool(s) based on the channel sensing mechanism.

For the in-coverage UE, a gNB can be configured to adopt Mode 1 or Mode 2. For the out-of-coverage UE, only Mode 2 can be adopted.

As in LTE, scheduling over the sidelink in NR is done in different ways for Mode 1 and Mode 2.

Mode 1 supports the following two kinds of grants:
- Dynamic grant: When the traffic to be sent over sidelink arrives at a transmitter UE, this UE should launch the four-message exchange procedure to request sidelink resources from a gNB (SR on UL, grant, BSR on UL, grant for data on SL sent to UE). During the resource request procedure, a gNB may allocate a sidelink radio network temporary identifier (SL-RNTI) to the transmitter UE. If this sidelink resource request is granted by a gNB, then a gNB indicates the resource allocation for the PSCCH and the PSSCH in the downlink control information (DCI) conveyed by PDCCH with CRC scrambled with the SL-RNTI. When a transmitter UE receives such a DCI, a transmitter UE can obtain the grant only if the scrambled CRC of DCI can be successfully solved by the assigned SL-RNTI. A transmitter UE then indicates the time-frequency resources and the transmission scheme of the allocated PSSCH in the PSCCH, and launches the PSCCH and the PSSCH on the allocated resources for sidelink transmissions. When a grant is obtained from a gNB, a transmitter UE can only transmit a single TB. As a result, this kind of grant is suitable for traffic with a loose latency requirement.
- Configured grant: For the traffic with a strict latency requirement, performing the four-message exchange procedure to request sidelink resources may induce unacceptable latency. In this case, prior to the traffic arrival, a transmitter UE may perform the four-message exchange procedure and request a set of resources. If a grant can be obtained from a gNB, then the requested resources are reserved in a periodic manner. Upon traffic arriving at a transmitter UE, this UE can launch the PSCCH and the PSSCH on the upcoming resource occasion. In fact, this kind of grant is also known as grant-free transmissions.

In both dynamic grant and configured grant, a sidelink receiver UE cannot receive the DCI (since it is addressed to the transmitter UE), and therefore a receiver UE should perform blind decoding to identify the presence of PSCCH and find the resources for the PSSCH through the SCI.

When a transmitter UE launches the PSCCH, CRC is also inserted in the SCI without any scrambling.

In the Mode 2 resource allocation, when traffic arrives at a transmitter UE, this transmitter UE should autonomously select resources for the PSCCH and the PSSCH. To further minimize the latency of the feedback HARQ ACK/NACK transmissions and subsequently retransmissions, a transmitter UE may also reserve resources for PSCCH/PSSCH for retransmissions. To further enhance the probability of successful TB decoding at one shot and thus suppress the probability to perform retransmissions, a transmitter UE may repeat the TB transmission along with the initial TB transmission. This mechanism is also known as blind retransmission. As a result, when traffic arrives at a transmitter UE, then this transmitter UE should select resources for the following transmissions:
1) The PSSCH associated with the PSCCH for initial transmission and blind retransmissions.
2) The PSSCH associated with the PSCCH for retransmissions.

Since each transmitter UE in sidelink transmissions should autonomously select resources for above transmissions, how to prevent different transmitter UEs from selecting the same resources turns out to be a critical issue in Mode 2. A particular resource selection procedure is therefore imposed to Mode 2 based on channel sensing. The channel sensing algorithm involves measuring RSRP on different subchannels and requires knowledge of the different UEs power levels of DMRS on the PSSCH or the DMRS on the PSCCH depending on the configuration. This information is known only after receiver SCI launched by (all) other UEs. The sensing and selection algorithm is rather complex.

As described in clause 6.3.2.2 in 3GPP Technical Report (TR) 37.985 v16.0.0, Mode 2 is for UE autonomous resource selection. Its basic structure is of a UE sensing, within a (pre-)configured resource pool, which resources are not in use by other UEs with higher-priority traffic, and choosing an appropriate amount of such resources for its own transmissions. Having selected such resources, the UE can transmit and re-transmit in them a certain number of times, or until a cause of resource reselection is triggered.

The mode 2 sensing procedure can select and then reserve resources for a variety of purposes reflecting that NR V2X introduces sidelink HARQ in support of unicast and groupcast in the physical layer. It may reserve resources to be used for a number of blind (re-)transmissions or HARQ-feedback-based (re-)transmissions of a transport block, in which case the resources are indicated in the SCI(s) scheduling the transport block. Alternatively, it may select resources to be used for the initial transmission of a later transport block, in which case the resources are indicated in an SCI scheduling a current transport block, in a manner similar to the LTE-V2X scheme (clause 5.2.2.2). Finally, an initial transmission of a transport block can be performed after sensing and resource selection, but without a reservation.

The first-stage SCIs transmitted by UEs on PSCCH indicate the time-frequency resources in which the UE will transmit a PSSCH. These SCI transmissions are used by sensing UEs to maintain a record of which resources have been reserved by other UEs in the recent past. When a resource selection is triggered (e.g. by traffic arrival or a re-selection trigger), the UE considers a sensing window which starts a (pre-)configured time in the past and finishes shortly before the trigger time. The window can be either 1100 ms or 100 ms wide, with the intention that the 100 ms option is particularly useful for aperiodic traffic, and 1100 ms particularly for periodic traffic. A sensing UE also measures the SL-RSRP in the slots of the sensing window, which implies the level of interference which would be caused and experienced if the sensing UE were to transmit in them. In NR-V2X, SL-RSRP is a (pre-)configurable measurement of either PSSCH-RSRP or PSCCH-RSRP.

The sensing UE then selects resources for its (re-)transmission(s) from within a resource selection window. The window starts shortly after the trigger for (re-)selection of resources, and cannot be longer than the remaining latency budget of the packet due to be transmitted. Reserved resources in the selection window with SL-RSRP above a threshold are excluded from being candidates by the sensing UE, with the threshold set according to the priorities of the traffic of the sensing and transmitting UEs. Thus, a higher priority transmission from a sensing UE can occupy resources which are reserved by a transmitting UE with sufficiently low SL-RSRP and sufficiently lower-priority traffic.

If the set of resources in the selection window which have not been excluded is less than a certain proportion of the available resources within the window, the SL-RSRP exclusion threshold is relaxed in 3 dB steps. The proportion is set by (pre-)configuration to 20%, 35%, or 50% for each traffic priority. The UE selects an appropriate amount of resources randomly from this non-excluded set. The resources selected are not in general periodic. Up to three resources can be indicated in each SCI transmission, which can each be independently located in time and frequency. When the indicated resources are for semi-persistent transmission of another transport block, the range of supported periodicities is expanded compared to LTE-V2X, in order to cover the broader set of envisioned use cases in NR-V2X.

Shortly before transmitting in a reserved resource, a sensing UE re-evaluates the set of resources from which it can select, to check whether its intended transmission is still suitable, taking account of late-arriving SCIs due, typically, to an aperiodic higher-priority service starting to transmit after the end of the original sensing window. If the reserved resources would not be part of the set for selection at this time (T3), then new resources are selected from the updated resource selection window. The cut-off time T3 is long enough before transmission to allow the UE to perform the calculations relating to resource re-selection.

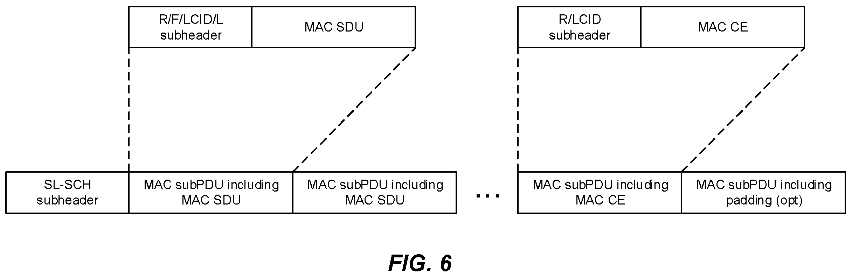

The timeline of the sensing and resource (re-)selection windows with respect to the time of trigger n, are shown in Figure 6.3.2.2-2(a) in TR 37.985 V 16.0.0, and the effect of the possibility of re-evaluation before first use of the reservation in Figure 6.3.2.2-2(b) in TR 37.985 V 16.0.0.

There are a number of triggers for resource re-selection, several of which are similar to LTE-V2X in Clause 5.2.2.2 in TR 37.985 V 16.0.0. In addition, there is the possibility to configure a resource pool with a pre-emption function designed to help accommodate aperiodic sidelink traffic, so that a UE reselects all the resources it has already reserved in a particular slot if another nearby UE with higher priority indicates it will transmit in any of them, implying a high-priority aperiodic traffic arrival at the other UE, and the SL-RSRP is above the exclusion threshold. The application of pre-emption can apply between all priorities of data traffic, or only when the priority of the pre-empting traffic is higher than a threshold and higher than that of the pre-empted traffic. A UE does not need to consider the possibility of pre-emption later than time T3 before the particular slot containing the reserved resources.

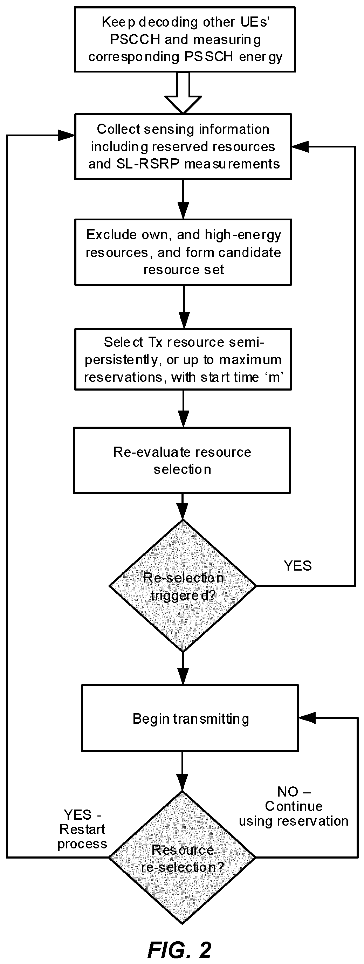

Figure 2 corresponds to Figure 6.3.2.2-1 (Summary of sensing and resource (re-)selection procedures) in TR 37.985 V 16.0.0.

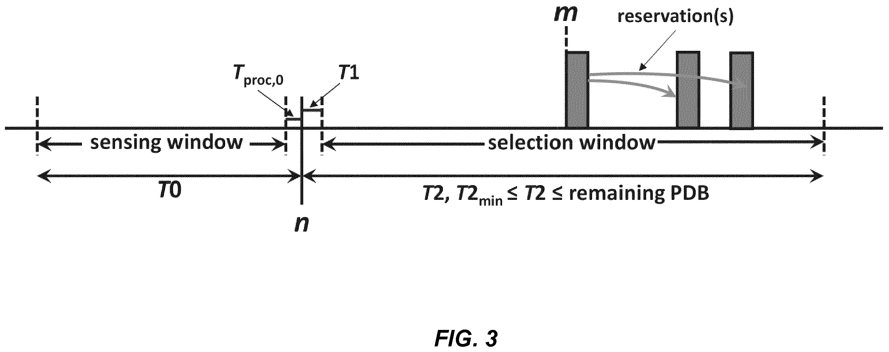

Figure 3 corresponds to Figure 6.3.2.2-2(a) (Timeline of sensing and resource (re-)selection procedure triggered at time n, without re-evaluation before (m-T3)) in TR 37.985 V 16.0.0. Its first reserved resource is at time m in TR 37.985 V 16.0.0.

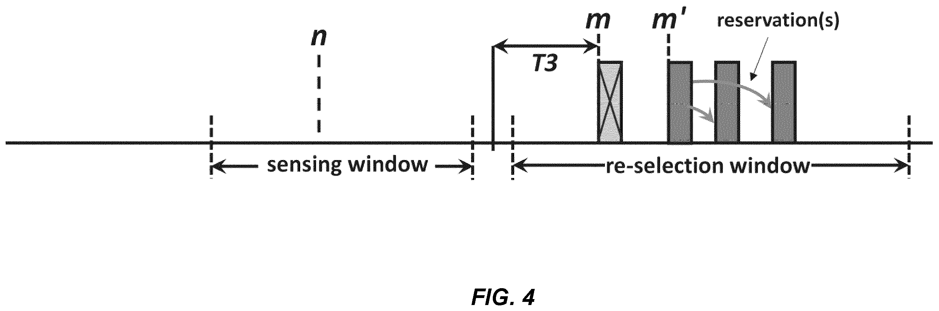

Figure 4 corresponds to Figure 6.3.2.2-2(b) (Timeline of sensing and resource (re-)selection procedure originally triggered at time n, which has a first reserved resource at time m, when re-evaluation occurring at m-T3 determines the resources are no longer selectable) in TR 37.985 V 16.0.0. The new re-evaluation cut-off becomes (m'-T3) in TR 37.985 V 16.0.0.

Regarding SL congestion control, as described in clause 5.3 in TR 37.985 V 16.0.0 for LTE V2X feature, a physical measurement of CBR is also defined in each subframe in clause 5.1.30 of TS 36.214 V16.1.0, which measures the portion of the resource in a resource pool which has a high received signal energy (S-RSSI) in the most recent 100 subframes. CBR is a measurement of the congestion present recently in the resource pool. Another measurement, CR defined in clause 5.1.31 of TS 36.214 V16.1.0, counts the total number of subchannels a UE has and will transmit in during a window of up to 1000 ms including the current subframe. CR is thus a measurement of how much resource a UE has recently, and will soon, claim.

A UE can be (pre-)configured with a set of CBR ranges to each of which is linked a CR-limit. When a UE finds its CR exceeds the CR-limit for the CBR range it currently measures, it must reduce its CR to not exceed the limit. How this is done is up to UE implementation, and can include increasing MCS to reduce resource occupation, dropping (re-)transmissions, etc. ProSe per Packet Priority (PPPP) can also be (pre-)configured with a mapping to the UE's maximum permitted transmit power, the limitation on which acts to reduce the CBR measured by sufficiently distant UEs.

PPPP is used as described in Clause 5.2.2 to aid distributed sidelink congestion control based on the relative priorities of traffic from UEs that consider occupying a given resource. PPPP and CBR can each also be (pre-)configured with mappings to ranges of values of transmission parameters, e.g. a range of MCS values, and/or a range of numbers of subchannels, etc. In this case, the UE has to choose its transmission parameters from within the range corresponding to the prevailing PPPP and/or CBR.

Congestion control for NR-V2X is similar to LTE-V2X, and it likewise is used in resource allocation mode 2 in NR. The main differences are that each packet is associated with a single 'priority' value, passed down to the physical layer from upper layers, which is comparable to PPPP in LTE-V2X. The priority value is transmitted in the first-stage SCI associated with each transport block. Broadly equivalent measurements of CBR and CR, together with CR-limits are defined, which can be used similarly to constrain the ranges of transmission parameters. NR V2X sets a shorter time of 1 ms or 2 ms in which the UE must calculate the CR and CBR than LTE-V2X's 4 ms, with the aim of adapting to faster fluctuations in congestion due to aperiodic traffic.

Regarding MAC PDU (SL-SCH), as described in clause 6.1.6 of TS 38.321 V 16.2.1 , a MAC protocol data unit (PDU) consists of one SL-SCH subheader and one or more MAC subPDUs. Each MAC subPDU consists of one of the following:
- A MAC subheader only (including padding);
- A MAC subheader and a MAC SDU;
- A MAC subheader and a MAC CE;
- A MAC subheader and padding.

The MAC SDUs are of variable sizes.

Each MAC subheader except SL-SCH subheader corresponds to a MAC SDU, a MAC CE, or padding.

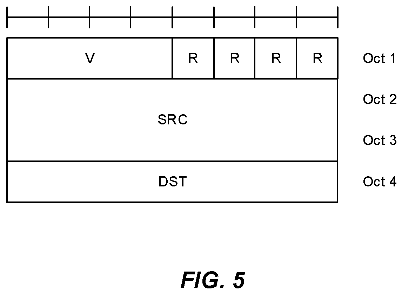

As shown in Figure 5, which corresponds to Figure 6.1.6-1 (SL-SCH MAC subheader) in TS 38.321 V16.2.1, the SL-SCH subheader is of a fixed size and consists of the seven header fields V/R/R/R/R/SRC/DST.

A MAC subheader except for fixed-sized MAC CE and padding consists of the four header fields R/F/LCID/L as depicted in Figure 6.1.2-1 (with 8-bit L field) of TS 38.321 V 16.2.1 and Figure 6.1.2-2 (with 16-bit L field) of TS 38.321 V 16.2.1 (which corresponds to Figure 6). A MAC subheader for fixed-sized MAC CE and padding consists of the two header fields R/LCID as depicted in Figure 6.1.2-3 of TS 38.321 V 16.2.1.

SL MAC subPDU(s) with MAC SDU(s) is placed after the SL-SCH subheader and before the MAC subPDU with a MAC CE and the MAC subPDU with padding in the MAC PDU as depicted in Figure 6.1.6-2. SL MAC subPDU with a MAC CE is placed after all the MAC subPDU(s) with MAC SDU and before the MAC subPDU with padding in the MAC PDU as depicted in Figure 6. The size of padding can be zero.

A maximum of one MAC PDU can be transmitted per TB per MAC entity.

The 3GPP Release 17 New Radio (NR) sidelink (SL) enhancement Work Item Description (WID) RP-201385 has defined objectives to specify solutions which can enhance NR sidelink for V2X, public safety, and commercial use cases. This WID includes the following work items:
- Study the feasibility and benefit of the enhancement(s) in mode 2 for enhanced reliability and reduced latency in consideration of both PRR and PIR defined in TR37.885 (by RAN#91), and specify the identified solution if deemed feasible and beneficial [RAN1, RAN2]
   ■ Inter-UE coordination with the following until RAN#90.
      ◆ A set of resources is determined at UE-A. This set is sent to UE-B in mode 2, and UE-B takes this into account in the resource selection for its own transmission.
   ■ Note: The study scope after RAN#90 is to be decided in RAN#90.
   ■ Note: The solution should be able to operate in-coverage, partial coverage, and out-of-coverage and to address consecutive packet loss in all coverage scenarios.
   ■ Note: RAN2 work will start after [RAN#89].

For the above study objective, an inter-UE coordination mechanism will be studied for enhancements in SL resource allocation Mode 2. With the mechanism, a UE (e.g., UE-A) will be able to signal "A set of resources determined at the UE" to another UE (e.g., UE-B). This other UE can consider the received signaling for its own resource selection procedure. The detailed signaling alternatives are pending to be addressed. The possible signaling alternatives are expected to include at least PC5-RRC signaling, L1 signaling, MAC CE, etc. Among all these signaling alternatives, MAC CE based signaling alternative would be able to achieve a good balance between reduction of signaling overhead and feasibility of carrying sufficient signaling content.

Therefore, assuming that MAC CE based signaling alternative will be studied and adopted as one possible signaling alternative, it is necessary to study the below corresponding issues:
- Issue 1: what is the MAC CE format? In other words, what information fields need to be carried in the MAC CE?
- Issue 2: How to guarantee a reliable and timely transmission for the MAC CE?

The present disclosure proposes an improved solution for sidelink transmission. Now, a description of various embodiments of the present disclosure will be provided.

The embodiments are described in the context of NR sidelink, but not limited. Similar embodiments are also applicable to LTE sidelink.

All embodiments are applicable for SL transmissions (including unicast, groupcast, and broadcast) with SL resource allocation Mode 2.

A new MAC CE containing information that indicates resources (e.g., "a set of resources"), which may be determined by a first wireless communication device (referred to as "UE-A" in the following description), is transmitted by UE-A to a second wireless communication device (referred to as "UE-B" for the following description) for inter-UE coordination. This new MAC CE is sometimes referred to herein as an SL resource indicator MAC CE; however, other names may equally be used. As described below, the resources indicated by the information field(s) in the MAC CE are, for example: (a) time resources, frequency resources, or both time and frequency resources that are preferred for UE-B transmission (i.e., preferred for autonomous (e.g., Mode 2) sidelink transmission by UE-B), (b) time resources, frequency resources, or both time and frequency resources that are not preferred for UE-B transmission (i.e., not preferred to autonomous (e.g., Mode 2) sidelink transmission by UE-B).

In one embodiment, the MAC CE contains at least one of the following:
- One or more information fields (referred to herein as "indicating information field(s)" in order to distinguish them from information fields below) carrying information that indicates a purpose or type of each of a number of other information fields comprised in the MAC CE. For example, the indicating information field(s) carries information that indicates (e.g., for all other information fields or for some subset of the other information fields included in the MAC CE):
   a. resources (time resources, frequency resources, or both time and frequency resources) that are preferred for UE-B's sidelink transmission(s) (e.g., preferred for UE-B's autonomous (e.g., Mode 2) sidelink transmission(s)); or
   b. resources (time resources, frequency resources, or both time and frequency resources) that are not preferred for UE-B's sidelink transmission(s); or
   c. resources (time resources, frequency resources, or both time and frequency resources) that are currently experiencing a collision (e.g., between transmissions by two or more radio nodes).
- The information fields corresponding to the purpose/type indicated in the indicating information field(s). For example, the corresponding information fields may indicate a status of each resource. If there are no specialized indicating information field(s), each information field may indicate the resources preferred to be used by UE-B, the resources preferred not to be used by UE-B, and/or the resources that are currently experiencing collision.

In one embodiment, in the MAC CE, multiple types of resources may be indicated by the information fields. These types of resources include at least one of the following:
- time domain resources,
- frequency domain resources,
- reference signals associated with the subsequent transmissions such as, e.g., CSI-RS, DMRS, PTRS, etc.

In one embodiment, the MAC CE may also carry other information fields related to UE-A, such as, e.g.:
- reserved resources by UE-A, and/or
- measured CBR or CR results.

In addition, embodiments are also disclosed herein that relate to other aspects. For example, the following embodiments are also disclosed.
- In one embodiment, at least an SR configuration containing at least one PUCCH SR resource is configured to UE-A. The SR configuration is associated with at least a sidelink connection (e.g., PC5-RRC connection) between UE-A and UE-B. In this case, UE-A uses the SR configuration to request an SL grant with SL allocation Mode 1. In one embodiment, this SL grant is used by UE-A for the transmission of the MAC CE to UE-B.
- In one embodiment, the MAC CE is treated with higher priority compared to Sidelink CSI reporting MAC CE, since the receiving UE needs to receive the MAC CE prior to performing resource allocation with SL resource allocation Mode 2.
- In another embodiment, the MAC CE is treated with lower priority compared to Sidelink CSI reporting MAC CE.
- In one embodiment, the MAC CE is allowed to be transmitted alone using an SL grant without any data from any LCH.
- In one embodiment, a retransmission timer is defined for the MAC CE.
- In one embodiment, a periodic timer is defined for the MAC CE.
- In one embodiment, a prohibit timer is defined for the MAC CE.
- In one embodiment, UE-A transmits the MAC CE upon detecting a trigger. Embodiments are disclosed herein for various different types of triggers (also referred to herein as triggering conditions) for transmitting the MAC CE.

While not being limited to or by any particular advantage, embodiments disclosed herein may provide the following advantages. With the proposed MAC CE, UE-A is able to provide rich information on "different types of a set of resources" to UE-B. Using this information, UE-B can improve resource allocation to avoid resource collision. Therefore, inter-UE coordination is improved. Power saving of both UEs of the associated PC5-RRC connection is also improved.

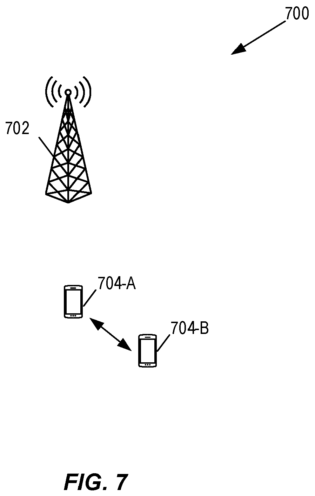

Figure 7 illustrates one example of a cellular communications network 700 in which embodiments of the present disclosure may be implemented. In the embodiments described herein, the cellular communications network 700 is a Radio Access Network (RAN) of a 5G system (5GS) (i.e., a Next Generation RAN (NG-RAN) or NR RAN) or a RAN of an Evolved Packet System (EPS) (i.e., an Evolved Universal Terrestrial RAN (E-UTRAN) or LTE RAN). In this example, the cellular communications network 700 includes a network node 702 and a number of wireless communications devices 704. In this particular example, the wireless communication devices 704 include a first wireless communication device 704-A, which is also referred to herein as UE-A 704A, and second wireless communication device 704-B, which is also referred to herein as UE-B 704-B. Both the first wireless communication device 704-A (UE-A) and the second wireless communication device 704-B (UE-B) are capable of sidelink communication (i.e., ProSe communication) in the embodiments described herein.

In one embodiment, in order to signal inter-UE coordination information (e.g., indicating a set of resources determined by UE-A) from UE-A to UE-B, a new MAC CE (sometimes referred to herein as an SL resource indicator MAC CE; however, other names may equally be used) is defined to include at least one of the following:
- One or more information fields (referred to herein as "indicating information field(s)" in order to distinguish them from information fields below) carrying information that indicates a purpose or type of each of a number of other information fields comprised in the MAC CE. For example, the indicating information field(s) carries information that indicates (e.g., for all other information fields or for some subset of the other information fields included in the MAC CE):
   a. resources that are preferred for UE-B's sidelink transmission(s) (e.g., preferred for UE-B's autonomous (e.g., Mode 2) sidelink transmission(s)); or
   b. resources that are not preferred for UE-B's sidelink transmission(s); or
   c. resources that are currently experiencing a collision (e.g., between transmissions by two or more radio nodes).
- The information fields corresponding to the purpose/type indicated in the indicating information field(s). For example, the corresponding information fields may indicate a status of each resource (see details in Figure 8). If there are no specialized indicating information fields, each information field may indicate the resources preferred to be used by UE-B, the resources preferred not to be used by UE-B, and/or the resources that are currently experiencing collision.

In one embodiment, the resources indicated by the information field(s) comprised in the MAC CE may include at least one of the following:
- time domain resources,
- frequency domain resources, and
- reference signals associated with the subsequent transmissions such as, e.g., CSI-RS, DMRS, PTRS, etc.

In the same MAC CE, there may be multiple information fields, each of which indicates separate purpose or type information. For each purpose or type, there may be multiple associated information fields.

The MAC CE may also include information fields indicating positions of a resource selection window. A size of the resource selection window may be determined according to a parameter signaled by an upper layer (e.g., radio resource control (RRC)), and may take a value in a range determined by the RRC parameter. One example of the resource selection window is shown as the below: 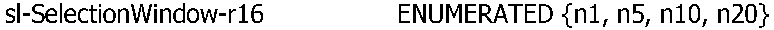 where value n1 corresponds to 1*2µ slots, value n5 corresponds to 5*2µ slots and so on, where µ = 0, 1, 2, 3 for subcarrier spacing (SCS) 15, 30, 60, 120 kHz respectively. Each transmission is carried out within one slot. Therefore, it may be sufficient to express the availability of time resources in units of slots.

Figure 8 illustrates an example of the MAC CE. Herein, the MAC CE includes an information field "indicator type" (indicating information field) that indicates the purpose/type of other information fields. For instance, the "indicator type" takes the values
- 00 representing that the indicated resources can be used for transmission by UE-B;
- 01 representing that the indicated resources cannot be used for transmission by UE-B;
- 10 representing that the indicated resources are currently experiencing collision.

In this example, the information field "indicator type" occupies 2 bits, which are sufficient to indicate four types or purposes. In other applications, the information field "indicator type" may only occupy fewer or more bits for indicating fewer or more different types or purposes.

The resources indicated in the information field "indicator type" are positioned within the resource window, associated with unique indices. A bitmap information field (corresponding to the information field "indicator type") may be introduced for the indicated resources in the MAC CE. For this example, the bitmap information field occupies 5 bits. Each bit in the bitmap information field is associated with a specific resource. The bit takes the value "0" indicating that the resource is present, while the value "1" indicating that the corresponding resource is absent.

In one embodiment, the MAC CE may also carry other information fields on UE-A, such as, e.g.:
- reserved resources by UE-A, and/or
- measured CBR or CR results.

In one unclaimed example, a new MAC subheader may be defined for the SL resource indicator MAC CE. Some information fields as described above (such as the type or purpose of the information fields, and/or a type or purpose of the MAC CE) may be included in the new MAC subheader. Note that each information field indicating the type or purpose can only be included in either the SL resource indicator MAC CE or the MAC subheader associated with the SL resource indicator MAC CE. The information fields indicating the type or purpose may be partially included in the SL resource indicator MAC CE and partially included in the MAC subheader associated with the SL resource indicator MAC CE. In addition, the information fields corresponding to the indicated purpose/type may only be included in the MAC CE.

In one unclaimed example, the SL resource indicator MAC CE may be indicated by a new Logical Channel ID (LCID), which is included in the MAC subheader associated to the MAC CE. An example of the new LCID is illustrated in Table1, wherein index 61 is defined for SL resource indicator MAC CEs.

**Table 1**

| **Index** | **LCID values** |
|---|---|
| 0 | SCCH carrying PC5-S messages that are not protected |
| 1 | SCCH carrying PC5-S messages "Direct Security Mode Command" and "Direct Security Mode Complete" |
| 2 | SCCH carrying other PC5-S messages that are protected |
| 3 | SCCH carrying PC5-RRC messages |
| 4-19 | Identity of the logical channel |
| 20-60 | Reserved |
| 61 | Sidelink resource indicator |
| 62 | Sidelink CSI Reporting |
| 63 | Padding |

In one unclaimed example, before transmitting the SL resource indicator MAC CE from UE-A to UE-B, at least a scheduling request (SR) configuration containing at least one PUCCH SR resource is configured to UE-A. The SR configuration is associated with at least a sidelink connection (e.g., PC5-RRC connection) between UE-A and UE-B. In this case, UE-A can use the SR configuration to request an SL grant with SL allocation Mode 1. If there is an available SL grant obtained by UE-A for a new sidelink transmission, UE-A may select the SL resource indicator MAC CE in the subsequent transmission to UE-B. If there is no SL grant available, UE-A may trigger a new SR for requesting a new SL grant for transmitting the SL resource indicator MAC CE.

Besides the SL resource indicator MAC CE, other type of MAC CEs, such as a sidelink CSI reporting MAC CE, may also be transmitted from UE-A to UE-B. In different circumstances, priorities of the SL resource indicator MAC CE and the sidelink CSI reporting MAC CE may vary. In one embodiment, the SL resource indicator MAC CE may be treated with a higher priority compared to the SL CSI reporting MAC CE, since the receiving UE-B needs to receive the SL resource indicator MAC CE prior to performing resource allocation with SL resource allocation Mode 2.

An example of the priority order for the SL transmission is illustrated as below. Logical channels shall be prioritized in accordance with the following order (highest priority listed first):
- data from Sidelink Common Control Channel (SCCH);
- SL resource indicator MAC CE;
- SL CSI Reporting MAC CE;
- data from any Sidelink Traffic Channel (STCH).

In one embodiment, the SL resource indicator MAC CE may be treated with a lower priority compared to the SL CSI reporting MAC CE. In this case, UE-A may send the SL CSI reporting MAC CE to the receiving UE-B before the SL CSI reporting MAC CE. As such, the receiving UE-B may pre-select a set of resources according to the received SL CSI reporting MAC CE. The receiving UE-B may further select resources with the set of pre-selected resources after the reception of the SL resource indicator MAC CE.

An example of the priority order for the SL transmission is illustrated as below. Logical channels shall be prioritized in accordance with the following order (highest priority listed first):
- data from SCCH;
- SL CSI Reporting MAC CE;
- SL resource indicator MAC CE;
- data from any STCH.

In one embodiment, how to prioritize the SL resource indicator MAC CE and the CSI reporting MAC CE may be controlled by a gNB or other UE (e.g., a controlling UE, not UE-A or UE-B). A controlling signaling (from the gNB or the controlling UE) may be transmitted to UE-A via at least one of the following:
- system information;
- RRC signaling;
- MAC CE;
- Paging message;
- L1 signaling such as DCI, or SCI;
- Pre-configured (hard-coded) in the specification.

In one embodiment, the SL resource indicator MAC CE may be allowed to be transmitted alone using an SL grant without any data from any Logical Channel (LCH). In one case, there is no data available from any LCH. In another case, there is some data in some LCHs. However, due to those LCHs do not match the LCP restrictions associated with the SL grant, the data from those LCHs are not allowed to be transmitted together with the MAC CE using the SL grant.

Alternatively, the SL resource indicator MAC CE may only be allowed to be transmitted together with other MAC CE(s), such as an SL CSI Reporting MAC CE, using an SL grant without any data from any LCH.

In one unclaimed example, a retransmission timer may be defined for UE-A transmitting the MAC CE and/or the MAC subheader associated with the MAC CE. The retransmission timer may be configured per sidelink connection (e.g., PC5-RRC connection). The retransmission timer is started/restarted immediately after every transmission of the MAC CE and/or the MAC subheader associated with the MAC CE. The retransmission timer may be stopped upon reception of a signaling from the receiving UE-B indicating that the receiving UE-B has responded to reception of the MAC CE and/or the MAC subheader associated with the MAC CE. Alternatively, the retransmission timer may be stopped upon reception of a HARQ ACK indicating the receiving UE-B has received a Transport Block (TB) carrying the MAC CE and/or the MAC subheader associated with the MAC CE successfully. Alternatively, the retransmission timer may be stopped after transmission of the TB carrying the MAC CE and/or the MAC subheader associated with the MAC CE. The same MAC CE and/or the MAC subheader associated with the MAC CE can be triggered one or more times upon expiry of the retransmission timer.

In one unclaimed example, a periodic timer may be defined for UE-A transmitting the MAC CE and/or the MAC subheader associated with the MAC CE. UE-A may start or restart the periodic timer if the periodic timer is configured or preconfigured to UE-A. When the time in the periodic timer is expired, the UE triggers the MAC CE and/or the MAC subheader associated with the MAC CE, and sends to the receiving UE-B (associated with the PC5-RRC connection). The MAC CE and/or the MAC subheader associated with the MAC CE may be periodically transmitted to UE-B based on the periodic timer.

In one unclaimed example, a prohibit timer may be defined for UE-A transmitting the MAC CE and/or the MAC subheader associated with the MAC CE. The prohibit timer is started/restarted after every transmission of the MAC CE and/or the MAC subheader associated with the MAC CE. While the timer is running, the same MAC CE and/or the MAC subheader associated with the MAC CE is not allowed to be triggered or transmitted. The MAC CE and/or the MAC subheader associated with the MAC CE is triggered and transmitted only when the prohibit timer is not running.

In one embodiment, the MAC CE transmission may be associated with a latency requirement (i.e., latency bound). In other words, the latency since the MAC CE is triggered until the MAC CE is transmitted to the receiving UE-B, cannot be beyond the latency bound. UE-A may have multiple PC5-RRC connections. There may be multiple MAC CEs triggered on these PC5-RRC connections. If there is an SL grant available, UE-A may select the MAC CE with a shortest remaining latency bound to transmit using the SL grant. As such, the overall latency requirement for the triggered MAC CEs can be satisfied more efficiently.

In one embodiment, for any of the above embodiments, the MAC CE may be triggered by a UE (UE-A or UE-B) for a sidelink connection (e.g., a PC5-RRC connection between UE-A and UE-B) when at least one of the following events occur:
- A resource (re)selection has been triggered.
- A measured radio channel quality of the PC5-RRC connection has dropped below a configured threshold (optionally for a configured time period).
- A change of the measured radio channel quality of the PC5-RRC connection compared to the previous measurement has been beyond a configured threshold (optionally for a configured time period).
- A distance between two UEs (e.g., between UE-A and UE-B) has been over a configured threshold (optionally for a configured time period), due to mobility.
- A mobility state of one UE (either UE-A or UE-B) has changed. For example, the change of the UE speed is above a configured threshold (optionally for a configured time period).
- A measured congestion or load (e.g., in terms of CBR or CR) for a concerned resource pool has been over a configured threshold (optionally for a configured time period).
- A measured HARQ NACK ratio of the transmissions on the PC5-RRC connection has been over a configured threshold (optionally for a configured time period).
- Measurements of an SL RB/traffic/service/LCH/LCG/application on the PC5-RRC connection indicate that the QoS requirements of the associated RB/traffic/service/LCH/LCG/application may be not fulfilled (i.e., the QoS requirements are risky to be fulfilled).
- A specific service/LCH has new data available or the volume of the available data of the specific service/LCH is above a configured threshold. The specific service/LCH may be a service with priority higher than a configured threshold.

For any of the above events, it may be triggered at either UE-A or UE-B. When the event is triggered at UE-B, UE-B may send a request message to UE-A, to ask UE-A to report the MAC CE. Upon reception of the request message, the MAC CE is triggered at UE-A.

In one embodiment, for any of the above embodiments, the MAC CE related configurations and timers may be configured to UE-A by a gNB or other UE (e.g., a controlling UE, not UE-A or UE-B), or preconfigured to UE-A if UE-A has no connection to the gNB.

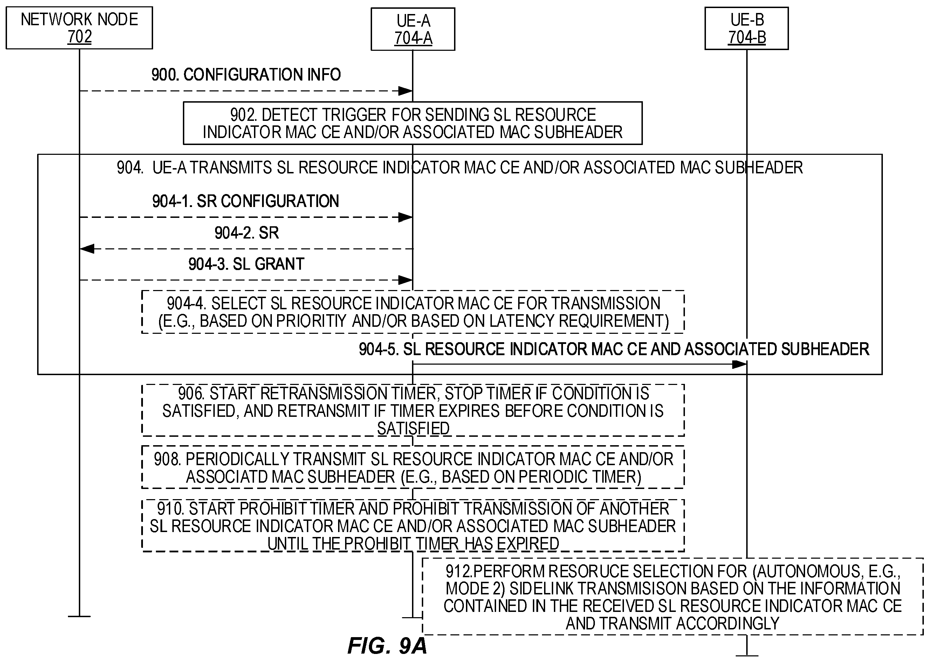

Figure 9A illustrates the operation of the cellular communication network 700 of Figure 7 in accordance with at least some of the embodiments described above. Optional steps are represented by dashed lines/boxes. As illustrated in Figure 9A, in some embodiments, the network node 702 sends configuration information to UE-A 704-A (step 900). As discussed above, this configuration information may include an SR configuration, a configuration(s) of one or more timers (e.g., a retransmission timer, a periodicity timer, and/or a prohibit timer), and/or any other configuration information used by UE-A 704-A in any of the embodiments described above.

UE-A detects a trigger for sending an SL resource indicator MAC CE and/or the MAC subheader associated with the MAC CE (step 902). Detection of the trigger may be, for example, detecting a triggering condition at UE-A 704-A or receiving a request from UE-B 704-B, as described above. Responsive to detecting the trigger, UE-A 704-A performs a procedure by which it transmits an SL resource indicator MAC CE and/or a MAC subheader associated with the MAC CE to UE-B 704-B in accordance with any of the embodiments described herein (step 904). As discussed above, the SL resource indicator MAC CE includes one or more information fields that comprise information that indicates one or more resources that are not preferred for use by UE-B 704-B for SL transmission (e.g., autonomous SL transmission such as, e.g., Mode 2 SL transmission). The one or more information fields may further comprise information that indicates one or more resources that are preferred for use by UE-B 704-B for SL transmission (e.g., autonomous SL transmission such as, e.g., Mode 2 SL transmission) and/or one or more resources that are currently experiencing collision. In addition, in some embodiments, information that indicates the type, or purpose, of the information comprised in each of these information fields of the SL resource indicator MAC CE is included either in a field(s) of the SL resource indicator MAC CE and/or in a MAC subheader associated to the SL indictor MAC CE (e.g., a MAC subheader in the same MAC sub-PDU). In some embodiments, additional information is included in the SL resource indicator MAC CE (or in the MAC subheader associated with the MAC CE). This additional information may include reserved resources by UE-A 704-A and/or measured CBR or CR results at UE-A 704-A. Still further, in some embodiments, the MAC subheader associated to the SL resource indicator MAC CE includes a LCID, where this LCID is a LCID defined for SL resource indicator MAC CEs.

In one embodiment, UE-A 704-A transmits the SL resource indicator MAC CE as follows. Note, however, that this is only an example. In this example, UE-A 704-A receives, from the network node 702, a SR configuration as described above (step 904-1). In one embodiment, this SR configuration defines a PUCCH resource on which UE-A 704-A can transmit a SR for an SL transmission (e.g., a Mode 1 SL transmission) to UE-B 704-B. UE-A 704-A transmits such as SR to the network node 702 in accordance with the SR configuration (step 904-2). In response, UE-A 704-A receives an SL grant from the network node 702 (step 904-3). Whether the transmission uses the SL grant or uses resources selected for autonomous SL transmission, UE-A 704-A selects the SL indictor MAC CE for transmission (step 904-4). As described above, this selection may take into consideration a priority defined or configured for SL resource indicator MAC CEs as well as a priority defined or configured to one or more other types of MAC CEs (e.g., sidelink CSI reporting MAC CEs and/or a priority defined or configured for data (e.g., data from any STCH). In addition or alternatively, this selection may take into account a latency requirement for transmission of the SL indictor MAC CE, as described above. UE-A 704-A then transmits the SL resource indicator MAC CE and, in some embodiments, a MAC subheader associated with the MAC CE, as described above (step 904-5).

As also described above, in one embodiment, UE-A 704-A starts a retransmission timer upon transmitting the SL resource indicator MAC CE, subsequently stops this timer if a stopping condition is satisfied, and retransmits the SL resource indicator MAC CE if this timer expires before the stopping criterion is satisfied (step 906). Examples of the stopping criterion for the retransmission timer are provided above.

In one embodiment, UE-A 704-A periodically transmits an SL resource indicator MAC CE and/or the MAC subheader associated with the MAC CE (e.g., based on a periodic timer), as described above (step 908).

In one embodiment, UE-A 704-A starts a prohibit timer upon transmitting the SL resource indicator MAC CE and prohibits transmission of another SL resource indicator MAC CE (e.g., to any other UE or to UE-B 704-B) until after the prohibit timer has expired (step 910). Thus, if a trigger is detected before the prohibit timer has expired, UE-A 704-A prevents transmission of a new SL resource indicator MAC CE even though the trigger is detected.

At UE-B 704-B, UE-B 704-B performs resource allocation to select one or more resources for an autonomous SL transmission (e.g., a Mode 2 transmission) based on the information included in the SL resource indictor CE and/or the associated MAC subheader received from UE-A (step 912). For example, a resource selection procedure similar to that shown in Figure 2 may be performed by UE-B 704-B but where UE-B 704-B considers the resources indicated as preferred for the resource selection, excludes resources that are indicated as not preferred from consideration for the resource selection, and/or excludes resources that are indicated as having a collision from consideration for the resource selection. In addition, the UE-B 704-B performs SL transmission using the selected one or more resources (step 912).

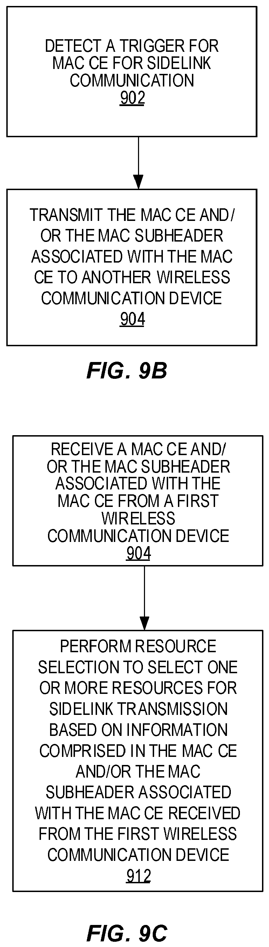

Figure 9B is a flow chart illustrating the operation of a wireless communication device, like UE-A 704-A, in accordance with one embodiment. In step 902, UE-A 704-A detects a trigger for MAC CE for sidelink communication. Then, in step 904, UE-A 704-A transmits the MAC CE and/or the MAC subheader associated with the MAC CE to another wireless communication device, like UE-B 704-B.

Figure 9C is another flow chart illustrating the operation of a wireless communication device, like UE-B 704-B, in accordance with one embodiment. In step 902, UE-B 704-B receives a MAC CE and/or the MAC subheader associated with the MAC CE from another wireless communication device, like UE-A 704-A. Then, in step 912 UE-B 704-B performs resource selection to select one or more resources for sidelink transmission based on information comprised in the MAC CE and/or the MAC subheader associated with the MAC CE received from UE-A 704-A.

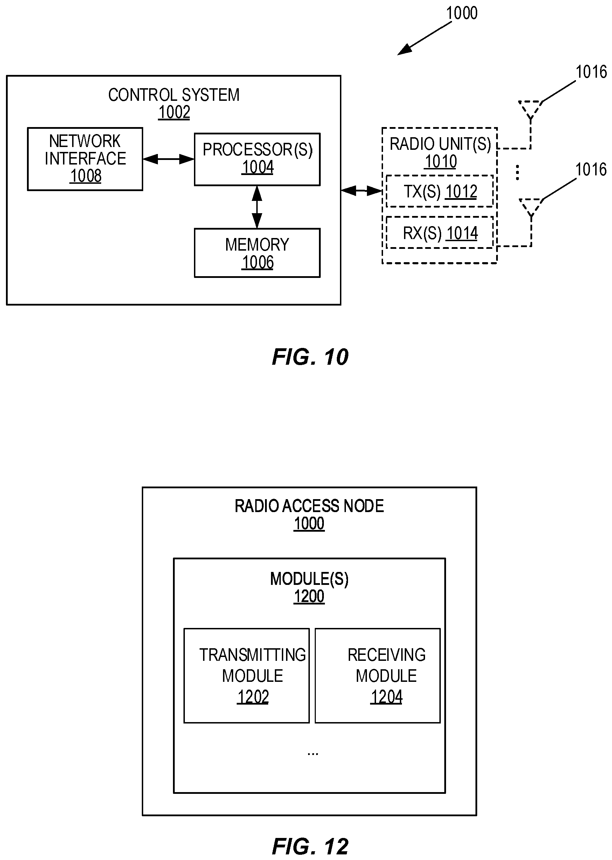

Figure 10 is a schematic block diagram of a radio access node 1000. Optional features are represented by dashed boxes. The radio access node 1000 may be, for example, the network node 702 or a network node that implements all or part of the functionality of the network node 702 described herein. As illustrated, the radio access node 1000 includes a control system 1002 that includes one or more processors 1004 (e.g., Central Processing Units (CPUs), Application Specific Integrated Circuits (ASICs), Field Programmable Gate Arrays (FPGAs), and/or the like), memory 1006, and a network interface 1008. The one or more processors 1004 are also referred to herein as processing circuitry. In addition, the radio access node 1000 may include one or more radio units 1010 that each includes one or more transmitters 1012 and one or more receivers 1014 coupled to one or more antennas 1016. The radio units 1010 may be referred to or be part of radio interface circuitry. In some embodiments, the radio unit(s) 1010 is external to the control system 1002 and connected to the control system 1002 via, e.g., a wired connection (e.g., an optical cable). However, in some other embodiments, the radio unit(s) 1010 and potentially the antenna(s) 1016 are integrated together with the control system 1002. The one or more processors 1004 operate to provide one or more functions of the radio access node 1000 as described herein (e.g., one or more functions of the network node 702 as described herein). In some embodiments, the function(s) are implemented in software that is stored, e.g., in the memory 1006 and executed by the one or more processors 1004.

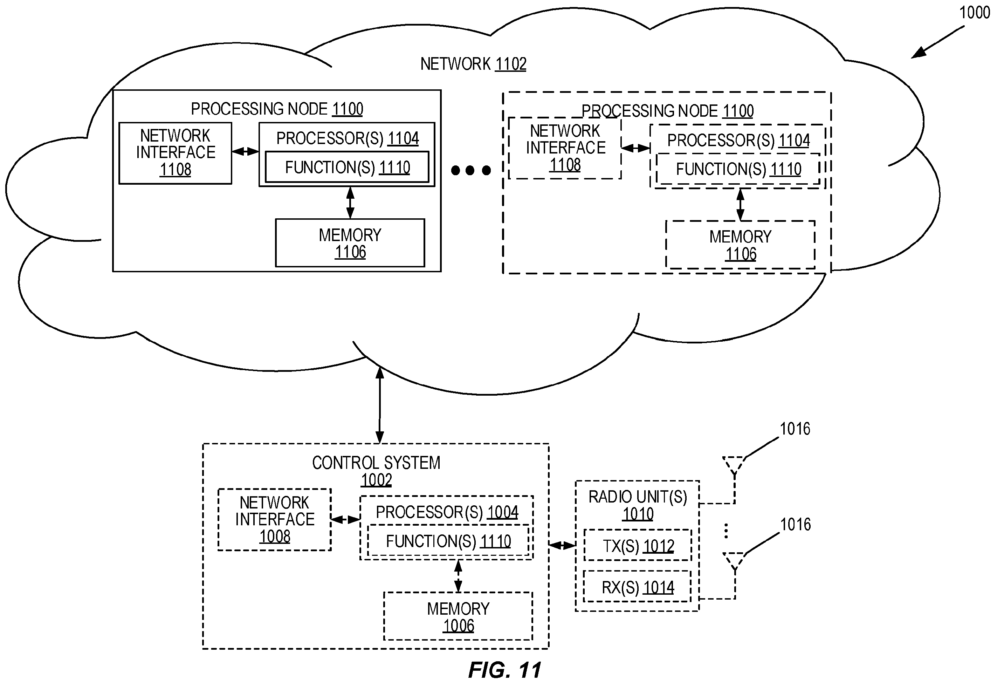

Figure 11 is a schematic block diagram that illustrates a virtualized embodiment of the radio access node 1000. This discussion is equally applicable to other types of network nodes. Further, other types of network nodes may have similar virtualized architectures. Again, optional features are represented by dashed boxes.

As used herein, a "virtualized" radio access node is an implementation of the radio access node 1000 in which at least a portion of the functionality of the radio access node 1000 is implemented as a virtual component(s) (e.g., via a virtual machine(s) executing on a physical processing node(s) in a network(s)). As illustrated, in this example, the radio access node 1000 may include the control system 1002 and/or the one or more radio units 1010, as described above. The control system 1002 may be connected to the radio unit(s) 1010 via, for example, an optical cable or the like. The radio access node 1000 includes one or more processing nodes 1100 coupled to or included as part of a network(s) 1102. If present, the control system 1002 or the radio unit(s) is connected to the processing node(s) 1100 via the network 1102. Each processing node 1100 includes one or more processors 1104 (e.g., CPUs, ASICs, FPGAs, and/or the like), memory 1106, and a network interface 1108.

In this example, functions 1110 of the radio access node 1000 described herein (e.g., one or more functions of the network node 702 as described herein) are implemented at the one or more processing nodes 1100 or distributed across the one or more processing nodes 1100 and the control system 1002 and/or the radio unit(s) 1010 in any desired manner. In some particular embodiments, some or all of the functions 1110 of the radio access node 1000 described herein are implemented as virtual components executed by one or more virtual machines implemented in a virtual environment(s) hosted by the processing node(s) 1100. As will be appreciated by one of ordinary skill in the art, additional signaling or communication between the processing node(s) 1100 and the control system 1002 is used in order to carry out at least some of the desired functions 1110. Notably, in some embodiments, the control system 1002 may not be included, in which case the radio unit(s) 1010 communicates directly with the processing node(s) 1100 via an appropriate network interface(s).

A computer program including instructions which, when executed by at least one processor, causes the at least one processor to carry out the functionality of the radio access node 1000 or a node (e.g., a processing node 1100) implementing one or more of the functions 1110 of the radio access node 1000 in a virtual environment according to any of the embodiments described herein is provided. A carrier comprising the aforementioned computer program product is provided. The carrier is one of an electronic signal, an optical signal, a radio signal, or a computer readable storage medium (e.g., a non-transitory computer readable medium such as memory).

Figure 12 is a schematic block diagram of the radio access node 1000. The radio access node 1000 includes one or more modules 1200 (such as a transmitting module 1202, a receiving module 1204, and etc.), each of which is implemented in software. The module(s) 1200 (such as the transmitting module 1202) provide the functionality of the radio access node 1000 described herein (e.g., one or more functions of the network node 702 as described herein). This discussion is equally applicable to the processing node 1100 of Figure 11 where the modules 1200 may be implemented at one of the processing nodes 1100 or distributed across multiple processing nodes 1100 and/or distributed across the processing node(s) 1100 and the control system 1002.

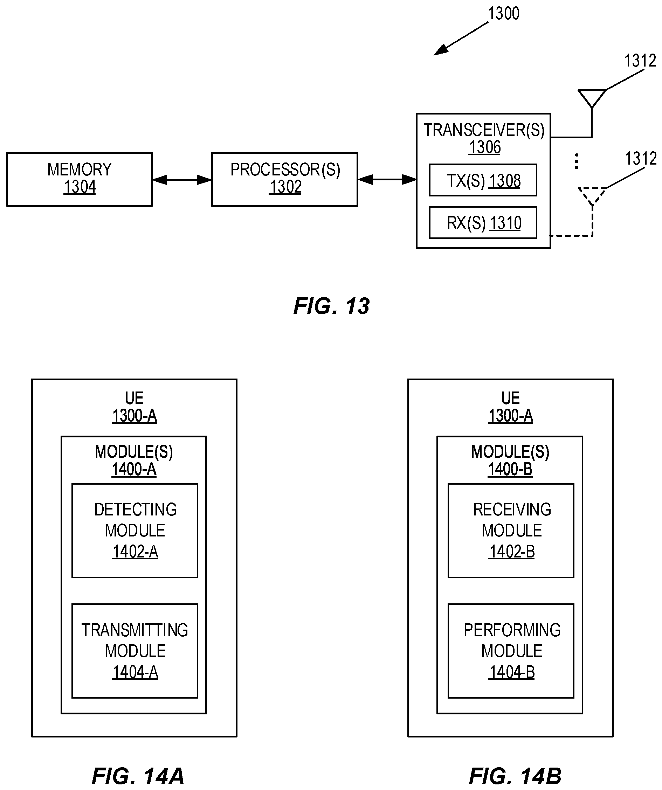

Figure 13 is a schematic block diagram of a wireless communication device 1300 according to some embodiments of the present disclosure. The wireless communication device 1300 may be the wireless communication device 704-A (UE-A) or the wireless communication device 704-B (UE-B). As illustrated, the wireless communication device 1300 includes one or more processors 1302 (e.g., CPUs, ASICs, FPGAs, and/or the like), memory 1304, and one or more transceivers 1306 each including one or more transmitters 1308 and one or more receivers 1310 coupled to one or more antennas 1312. The transceiver(s) 1306 includes radio-front end circuitry connected to the antenna(s) 1312 that is configured to condition signals communicated between the antenna(s) 1312 and the processor(s) 1302, as will be appreciated by on of ordinary skill in the art. The processors 1302 are also referred to herein as processing circuitry. The transceivers 1306 are also referred to herein as radio circuitry. In some embodiments, the functionality of the wireless communication device 1300 described above (e.g., the functionality of wireless communication device 704-A (UE-A) or the wireless communication device 704-B (UE-B) as described herein) may be fully or partially implemented in software that is, e.g., stored in the memory 1304 and executed by the processor(s) 1302. Note that the wireless communication device 1300 may include additional components not illustrated in Figure 13 such as, e.g., one or more user interface components (e.g., an input/output interface including a display, buttons, a touch screen, a microphone, a speaker(s), and/or the like and/or any other components for allowing input of information into the wireless communication device 1300 and/or allowing output of information from the wireless communication device 1300), a power supply (e.g., a battery and associated power circuitry), etc.

A computer program including instructions which, when executed by at least one processor, causes the at least one processor to carry out the functionality of the wireless communication device 1300 according to any of the embodiments described herein is provided. A carrier comprising the aforementioned computer program product is provided. The carrier is one of an electronic signal, an optical signal, a radio signal, or a computer readable storage medium (e.g., a non-transitory computer readable medium such as memory).

Figure 14A is a schematic block diagram of the wireless communication device 1300. In this example, the wireless communication device 1300 is the first wireless communication device 704-A. As illustrated, the wireless communication device 1300 includes one or more modules 1400-A, each of which is implemented in software. The module(s) 1400-A provide the functionality of the wireless communication device 1300 described herein (e.g., the functionality of wireless communication device 704-A (UE-A) as described herein). In one example, the modules 1400-A include a detecting module 1402-A operable to detect a trigger for a MAC CE for sidelink communication, as described above and a transmitting module 1404-A operable to, responsive to the detecting module 1402-A detecting the trigger, transmit the MAC CE and/or a MAC subheader associated with the MAC CE to a second wireless communication device 704-B. The MAC CE or the MAC subheader associated with the MAC CE comprises one or more information fields that indicate: and/or one or more resources that are not preferred to be used by the second wireless communication device (704-B) for sidelink transmission. The one or more information fields may further indicate one or more resources that are preferred to be used by the second wireless communication device (704-B) for sidelink transmission; and/or one or more resources that are experiencing a collision.

Figure 14B is a schematic block diagram of the wireless communication device 1300. In this example, the wireless communication device 1300 is the second wireless communication device 704-B. As illustrated, the wireless communication device 1300 includes one or more modules 1400-B, each of which is implemented in software. The module(s) 1400-B provide the functionality of the wireless communication device 1300 described herein (e.g., the functionality of wireless communication device 704-B (UE-B) as described herein). In one example, the modules 1400-B include a receiving module 1402-B operable to receive a MAC CE and/or an MAC subheader associated with the MAC CE from a first wireless communication device 704-A and a performing module 1404-B operable to perform resource selection to select one or more resources for sidelink transmission based on information comprised in the MAC CE and/or the MAC subheader associated with the MAC CE received from the first wireless communication device 704-A. The MAC CE or the MAC subheader associated with the MAC CE comprises one or more information fields that indicate: one or more resources that are not preferred to be used by the second wireless communication device (704-B) for sidelink transmission. The one or more information fields may further indicate one or more resources that are preferred to be used by the second wireless communication device (704-B) for sidelink transmission and/or one or more resources that are experiencing a collision.

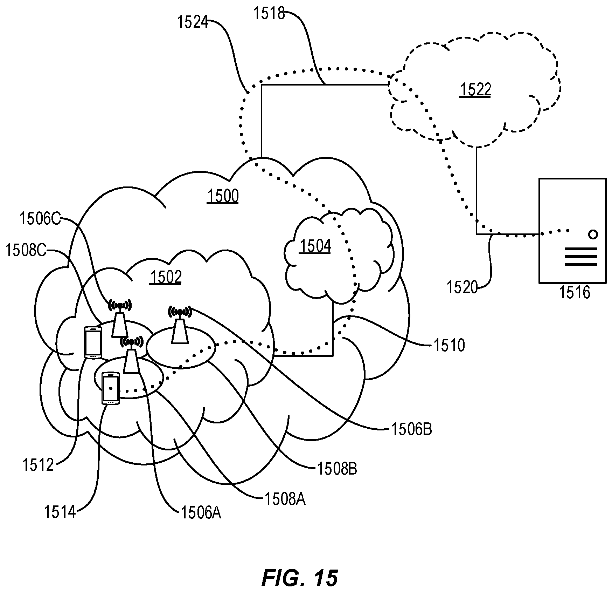

With reference to Figure 15, a communication system includes a telecommunication network 1500, such as a 3GPP-type cellular network, which comprises an access network 1502, such as a RAN, and a core network 1504. The access network 1502 comprises a plurality of base stations 1506A, 1506B, 1506C, such as Node Bs, eNBs, gNBs, or other types of wireless Access Points (APs), each defining a corresponding coverage area 1508A, 1508B, 1508C. Each base station 1506A, 1506B, 1506C is connectable to the core network 1504 over a wired or wireless connection 1510. A first UE 1512 located in coverage area 1508C is configured to wirelessly connect to, or be paged by, the corresponding base station 1506C. A second UE 1514 in coverage area 1508A is wirelessly connectable to the corresponding base station 1506A. While a plurality of UEs 1512, 1514 are illustrated in this example, the disclosed embodiments are equally applicable to a situation where a sole UE is in the coverage area or where a sole UE is connecting to the corresponding base station 1506.

The telecommunication network 1500 is itself connected to a host computer 1516, which may be embodied in the hardware and/or software of a standalone server, a cloud-implemented server, a distributed server, or as processing resources in a server farm. The host computer 1516 may be under the ownership or control of a service provider, or may be operated by the service provider or on behalf of the service provider. Connections 1518 and 1520 between the telecommunication network 1500 and the host computer 1516 may extend directly from the core network 1504 to the host computer 1516 or may go via an optional intermediate network 1522. The intermediate network 1522 may be one of, or a combination of more than one of, a public, private, or hosted network; the intermediate network 1522, if any, may be a backbone network or the Internet; in particular, the intermediate network 1522 may comprise two or more sub-networks (not shown).

The communication system of Figure 15 as a whole enables connectivity between the connected UEs 1512, 1514 and the host computer 1516. The connectivity may be described as an Over-the-Top (OTT) connection 1524. The host computer 1516 and the connected UEs 1512, 1514 are configured to communicate data and/or signaling via the OTT connection 1524, using the access network 1502, the core network 1504, any intermediate network 1522, and possible further infrastructure (not shown) as intermediaries. The OTT connection 1524 may be transparent in the sense that the participating communication devices through which the OTT connection 1524 passes are unaware of routing of uplink and downlink communications. For example, the base station 1506 may not or need not be informed about the past routing of an incoming downlink communication with data originating from the host computer 1516 to be forwarded (e.g., handed over) to a connected UE 1512. Similarly, the base station 1506 need not be aware of the future routing of an outgoing uplink communication originating from the UE 1512 towards the host computer 1516.

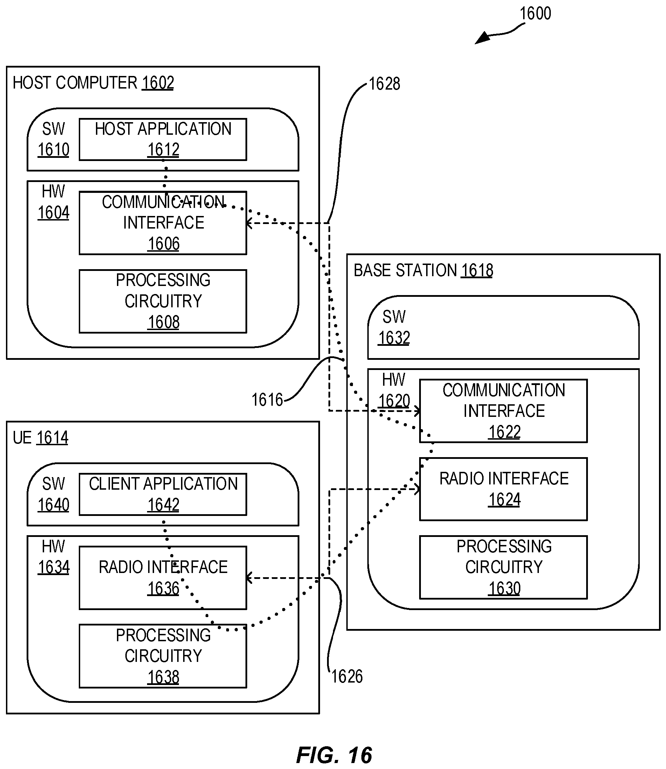

Example implementations, of the UE, base station, and host computer discussed in the preceding paragraphs will now be described with reference to Figure 16. In a communication system 1600, a host computer 1602 comprises hardware 1604 including a communication interface 1606 configured to set up and maintain a wired or wireless connection with an interface of a different communication device of the communication system 1600. The host computer 1602 further comprises processing circuitry 1608, which may have storage and/or processing capabilities. In particular, the processing circuitry 1608 may comprise one or more programmable processors, ASICs, FPGAs, or combinations of these (not shown) adapted to execute instructions. The host computer 1602 further comprises software 1610, which is stored in or accessible by the host computer 1602 and executable by the processing circuitry 1608. The software 1610 includes a host application 1612. The host application 1612 may be operable to provide a service to a remote user, such as a UE 1614 connecting via an OTT connection 1616 terminating at the UE 1614 and the host computer 1602. In providing the service to the remote user, the host application 1612 may provide user data which is transmitted using the OTT connection 1616.

The communication system 1600 further includes a base station 1618 provided in a telecommunication system and comprising hardware 1620 enabling it to communicate with the host computer 1602 and with the UE 1614. The hardware 1620 may include a communication interface 1622 for setting up and maintaining a wired or wireless connection with an interface of a different communication device of the communication system 1600, as well as a radio interface 1624 for setting up and maintaining at least a wireless connection 1626 with the UE 1614 located in a coverage area (not shown in Figure 16) served by the base station 1618. The communication interface 1622 may be configured to facilitate a connection 1628 to the host computer 1602. The connection 1628 may be direct or it may pass through a core network (not shown in Figure 16) of the telecommunication system and/or through one or more intermediate networks outside the telecommunication system. In the embodiment shown, the hardware 1620 of the base station 1618 further includes processing circuitry 1630, which may comprise one or more programmable processors, ASICs, FPGAs, or combinations of these (not shown) adapted to execute instructions. The base station 1618 further has software 1632 stored internally or accessible via an external connection.

The communication system 1600 further includes the UE 1614 already referred to. The UE's 1614 hardware 1634 may include a radio interface 1636 configured to set up and maintain a wireless connection 1626 with a base station serving a coverage area in which the UE 1614 is currently located. The hardware 1634 of the UE 1614 further includes processing circuitry 1638, which may comprise one or more programmable processors, ASICs, FPGAs, or combinations of these (not shown) adapted to execute instructions. The UE 1614 further comprises software 1640, which is stored in or accessible by the UE 1614 and executable by the processing circuitry 1638. The software 1640 includes a client application 1642. The client application 1642 may be operable to provide a service to a human or non-human user via the UE 1614, with the support of the host computer 1602. In the host computer 1602, the executing host application 1612 may communicate with the executing client application 1642 via the OTT connection 1616 terminating at the UE 1614 and the host computer 1602. In providing the service to the user, the client application 1642 may receive request data from the host application 1612 and provide user data in response to the request data. The OTT connection 1616 may transfer both the request data and the user data. The client application 1642 may interact with the user to generate the user data that it provides.

It is noted that the host computer 1602, the base station 1618, and the UE 1614 illustrated in Figure 16 may be similar or identical to the host computer 1516, one of the base stations 1506A, 1506B, 1506C, and one of the UEs 1512, 1514 of Figure 15, respectively. This is to say, the inner workings of these entities may be as shown in Figure 16 and independently, the surrounding network topology may be that of Figure 15.

In Figure 16, the OTT connection 1616 has been drawn abstractly to illustrate the communication between the host computer 1602 and the UE 1614 via the base station 1618 without explicit reference to any intermediary devices and the precise routing of messages via these devices. The network infrastructure may determine the routing, which may be configured to hide from the UE 1614 or from the service provider operating the host computer 1602, or both. While the OTT connection 1616 is active, the network infrastructure may further take decisions by which it dynamically changes the routing (e.g., on the basis of load balancing consideration or reconfiguration of the network).

The wireless connection 1626 between the UE 1614 and the base station 1618 is in accordance with the teachings of the embodiments described throughout this disclosure. One or more of the various embodiments improve the performance of OTT services provided to the UE 1614 using the OTT connection 1616, in which the wireless connection 1626 forms the last segment. More precisely, the teachings of these embodiments may improve the improve the e.g., latency, power consumption, etc. and thereby provide benefits such as e.g., reduced user waiting time, relaxed restriction on file size, better responsiveness, extended battery lifetime, etc.

A measurement procedure may be provided for the purpose of monitoring data rate, latency, and other factors on which the one or more embodiments improve. There may further be an optional network functionality for reconfiguring the OTT connection 1616 between the host computer 1602 and the UE 1614, in response to variations in the measurement results. The measurement procedure and/or the network functionality for reconfiguring the OTT connection 1616 may be implemented in the software 1610 and the hardware 1604 of the host computer 1602 or in the software 1640 and the hardware 1634 of the UE 1614, or both. In some embodiments, sensors (not shown) may be deployed in or in association with communication devices through which the OTT connection 1616 passes; the sensors may participate in the measurement procedure by supplying values of the monitored quantities exemplified above, or supplying values of other physical quantities from which the software 1610, 1640 may compute or estimate the monitored quantities. The reconfiguring of the OTT connection 1616 may include message format, retransmission settings, preferred routing, etc.; the reconfiguring need not affect the base station 1618, and it may be unknown or imperceptible to the base station 1618. Such procedures and functionalities may be known and practiced in the art. In certain embodiments, measurements may involve proprietary UE signaling facilitating the host computer 1602's measurements of throughput, propagation times, latency, and the like. The measurements may be implemented in that the software 1610 and 1640 causes messages to be transmitted, in particular empty or 'dummy' messages, using the OTT connection 1616 while it monitors propagation times, errors, etc.

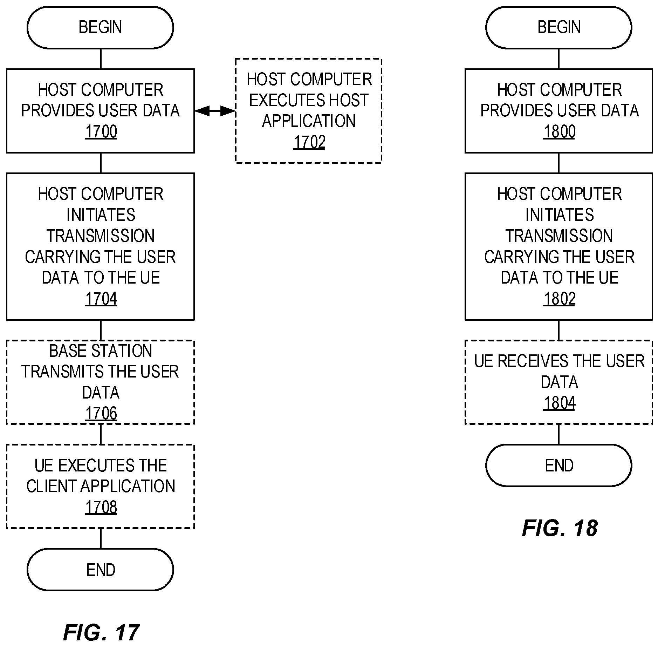

Figure 17 is a flowchart illustrating a method implemented in a communication system. The communication system includes a host computer, a base station, and a UE which may be those described with reference to Figures 15 and 16. For simplicity of the present disclosure, only drawing references to Figure 17 will be included in this section. In step 1700, the host computer provides user data. In sub-step 1702 (which may be optional) of step 1700, the host computer provides the user data by executing a host application. In step 1704, the host computer initiates a transmission carrying the user data to the UE. In step 1706 (which may be optional), the base station transmits to the UE the user data which was carried in the transmission that the host computer initiated, in accordance with the teachings of the embodiments described throughout this disclosure. In step 1708 (which may also be optional), the UE executes a client application associated with the host application executed by the host computer.

Figure 18 is a flowchart illustrating a method implemented in a communication system. The communication system includes a host computer, a base station, and a UE which may be those described with reference to Figures 15 and 16. For simplicity of the present disclosure, only drawing references to Figure 18 will be included in this section. In step 1800 of the method, the host computer provides user data. In an optional sub-step (not shown) the host computer provides the user data by executing a host application. In step 1802, the host computer initiates a transmission carrying the user data to the UE. The transmission may pass via the base station, in accordance with the teachings of the embodiments described throughout this disclosure. In step 1804 (which may be optional), the UE receives the user data carried in the transmission.

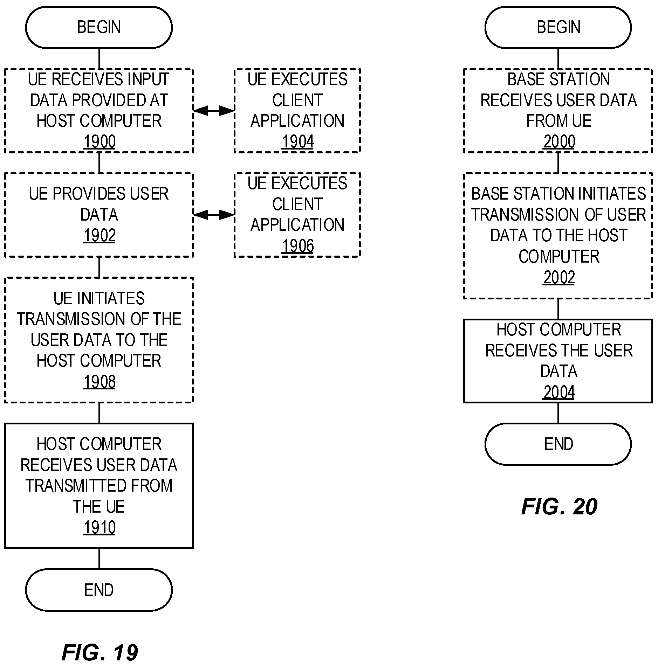

Figure 19 is a flowchart illustrating a method implemented in a communication system. The communication system includes a host computer, a base station, and a UE which may be those described with reference to Figures 15 and 16. For simplicity of the present disclosure, only drawing references to Figure 19 will be included in this section. In step 1900 (which may be optional), the UE receives input data provided by the host computer. Additionally or alternatively, in step 1902, the UE provides user data. In sub-step 1904 (which may be optional) of step 1900, the UE provides the user data by executing a client application. In sub-step 1906 (which may be optional) of step 1902, the UE executes a client application which provides the user data in reaction to the received input data provided by the host computer. In providing the user data, the executed client application may further consider user input received from the user. Regardless of the specific manner in which the user data was provided, the UE initiates, in sub-step 1908 (which may be optional), transmission of the user data to the host computer. In step 1910 of the method, the host computer receives the user data transmitted from the UE, in accordance with the teachings of the embodiments described throughout this disclosure.

Figure 20 is a flowchart illustrating a method implemented in a communication system. The communication system includes a host computer, a base station, and a UE which may be those described with reference to Figures 15 and 16. For simplicity of the present disclosure, only drawing references to Figure 20 will be included in this section. In step 2000 (which may be optional), in accordance with the teachings of the embodiments described throughout this disclosure, the base station receives user data from the UE. In step 2002 (which may be optional), the base station initiates transmission of the received user data to the host computer. In step 2004 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | | |
|---|---|---|
| • | 3GPP | Third Generation Partnership Project |
| • | 5G | Fifth Generation |
| • | 5GC | Fifth Generation Core |
| • | 5GS | Fifth Generation System |
| • | AF | Application Function |
| • | AMF | Access and Mobility Function |
| • | AN | Access Network |
| • | AP | Access Point |
| • | ASIC | Application Specific Integrated Circuit |
| • | AUSF | Authentication Server Function |
| • | CPU | Central Processing Unit |
| • | DN | Data Network |
| • | DSP | Digital Signal Processor |
| • | eNB | Enhanced or Evolved Node B |
| • | EPS | Evolved Packet System |
| • | E-UTRA | Evolved Universal Terrestrial Radio Access |
| • | FPGA | Field Programmable Gate Array |
| • | gNB | New Radio Base Station |
| • | gNB-DU | New Radio Base Station Distributed Unit |
| • | HSS | Home Subscriber Server |
| • | IoT | Internet of Things |
| • | IP | Internet Protocol |
| • | LTE | Long Term Evolution |
| • | MME | Mobility Management Entity |
| • | MTC | Machine Type Communication |
| • | NEF | Network Exposure Function |
| • | NF | Network Function |
| • | NR | New Radio |
| • | NRF | Network Function Repository Function |
| • | NSSF | Network Slice Selection Function |
| • | OTT | Over-the-Top |
| • | PC | Personal Computer |
| • | PCF | Policy Control Function |
| • | P-GW | Packet Data Network Gateway |
| • | QoS | Quality of Service |
| • | RAM | Random Access Memory |
| • | RAN | Radio Access Network |
| • | ROM | Read Only Memory |
| • | RRH | Remote Radio Head |
| • | RTT | Round Trip Time |
| • | SCCH | Sidelink Common Control Channel |
| • | SCEF | Service Capability Exposure Function |
| • | SCS | Subcarrier Spacing |
| • | SL | Sidelink |
| • | SMF | Session Management Function |
| • | SR | Scheduling Request |
| • | STCH | Sidelink Traffic Channel |
| • | UDM | Unified Data Management |
| • | UE | User Equipment |
| • | UPF | User Plane Function |
| • | WID | Work Item Description |

Those skilled in the art will recognize improvements and modifications to the embodiments of the present disclosure. All such improvements and modifications are considered within the scope of the concepts disclosed herein.

## Claims

1. A method performed by a first wireless communication device (704-A) comprising:
detecting (902) a trigger for a Medium Access Control, MAC, Control Element, CE, for sidelink communication; and
responsive to detecting (902) the trigger, transmitting (904-5) the MAC CE and/or a MAC subheader associated with the MAC CE to a second wireless communication device (704-B), **characterised by** that the MAC CE or the MAC subheader associated with the MAC CE comprises one or more information fields that indicates one or more resources that are not preferred to be used by the second wireless communication device (704-B) for sidelink transmission.

2. The method of claim 1 wherein transmitting (904-5) the MAC CE and/or the associated MAC subheader to the second wireless communication device (704-B) comprises transmitting (904) the MAC CE to the second wireless communication device (704-B).

3. The method of claim 2 wherein the MAC CE or the MAC subheader associated with the MAC CE further comprises one or more information fields that indicates:
one or more resources that are preferred to be used by the second wireless communication device (704-B) for sidelink transmission; and/or
one or more resources that are experiencing a collision.

4. The method of claim 3 wherein the sidelink transmission uses resources autonomously selected by the second wireless communication device.

5. The method of claim 3 wherein the one or more resources comprise one or more time domain resources, and/or one or more frequency domain resources, and/or one or more reference signals.

6. The method of any of claims 3 to 5 wherein either the MAC CE or the MAC subheader associated with the MAC CE comprises information that indicates a type or purpose of the one or more information fields.

7. The method of claim 6 wherein the type or purpose is to indicate one or more resources that are preferred to be used by the second wireless communication device (704-B) for autonomous sidelink transmission, or to indicate one or more resources that are not preferred to be used by the second wireless communication device (704-B) for autonomous sidelink transmission, or to indicate one or more resources that experiencing a collision.

8. The method of any of claims 1 to 7, wherein the MAC CE and/or the MAC subheader associated with the MAC CE carries information for inter-device coordination of resources using for sidelink transmissions.

9. The method of any of claims 1 to 8, wherein the detected trigger is any one of:
• a resource selection or reselection has been triggered,
• a measured radio channel quality of a connection has dropped below a configured threshold,
• a change of measured radio channel quality of the connection compared to a last measurement is beyond a configured threshold,
• a distance between the first and second wireless communication devices is over a configured threshold,
• a mobility state of either the first or second wireless communication device has changed,
• a measured congestion or load for a concerned resource pool is over a configured threshold,
• a measured Hybrid automatic repeat request, HARQ, negative-acknowledgement, NACK, ratio of transmissions on the connection is over a configured threshold,
• measurements of at least one of a sidelink resource block ,RB, traffic, service, Logical Channel, LCH, Logical Channel Group, LCG, application on the connection indicate that QoS requirements of the associated RB/traffic/service/LCH/LCG/application is not fulfilled,
• a specific service/LCH has data available or a volume of available data of the specific service/LCH is above a configured threshold, or
• reception of a request from the second wireless communication device.

10. A first wireless communication device (704-A) comprising:
one or more transmitters (1308);
one or more receivers (1310); and
processing circuitry (1302) associated with the one or more transmitters (1308) and the one or more receivers (1310), the processing circuity (1302 configured to cause the first wireless communication device (704-A) to perform the method of any of claims 1 to 9.

11. A method performed by a second wireless communication device (704-B) comprising:
receiving (904) a Medium Access Control, MAC, Control Element, CE and/or an MAC subheader associated with the MAC CE from a first wireless communication device (704-A); and
performing (912) resource selection to select one or more resources for sidelink transmission based on information comprised in the MAC CE and/or the MAC subheader associated with the MAC CE received from the first wireless communication device (704-A), **characterised by** that the MAC CE or the MAC subheader associated with the MAC CE comprises one or more information fields that indicates one or more resources that are not preferred to be used by the second wireless communication device (704-B) for sidelink transmission.

12. The method of claim 11 wherein the MAC CE or the MAC subheader associated with the MAC CE further comprises one or more information fields that indicates:
one or more resources that are preferred to be used by the second wireless communication device (704-B) for sidelink transmission; and/or
one or more resources that are experiencing a collision.

13. The method of claim 12 wherein either the MAC CE or the MAC subheader associated with the MAC CE comprises information that indicates a type or purpose of the one or more information fields.

14. The method of claim 13 wherein the type or purpose is to indicate one or more resources that are preferred to be used by the second wireless communication device (704-B) for sidelink transmission, or to indicate one or more resources that are not preferred to be used by the second wireless communication device (704-B) for autonomous sidelink transmission, or to indicate one or more resources that experiencing a collision.

15. A second wireless communication device (704-B) comprising:
one or more transmitters (1308);
one or more receivers (1310); and
processing circuitry (1302) associated with the one or more transmitters (1308) and the one or more receivers (1310), the processing circuitry (13020 configured to cause the second wireless communication device (704-B) to perform the method of any of claims 11 to 14.

## Patentansprüche

1. Verfahren, das von einer ersten drahtlosen Kommunikationsvorrichtung (704-A) durchgeführt wird und Folgendes umfasst:
Erkennen (902) eines Auslösers für ein Medienzugriffssteuerungs-MAC-,Steuerelement, CE, für Sidelink-Kommunikation; und
Senden (904-5) des MAC-CE und/oder eines mit dem MAC-CE assoziierten MAC-Subheaders an eine zweite drahtlose Kommunikationsvorrichtung (704-B) in Reaktion auf das Erkennen (902) des Auslösers, **dadurch gekennzeichnet, dass**
das MAC-CE oder der mit dem MAC-CE assoziierte MAC-Subheader ein oder mehrere Informationsfelder umfasst, die eine oder mehrere Ressourcen angeben, deren Verwendung für Sidelink-Übertragung von der zweiten drahtlosen Kommunikationsvorrichtung (704-B) nicht bevorzugt wird.

2. Verfahren nach Anspruch 1, wobei das Senden (904-5) des MAC-CE und/oder des assoziierten MAC-Subheaders an die zweite drahtlose Kommunikationsvorrichtung (704-B) Senden (904) des MAC-CE an die zweite drahtlose Kommunikationsvorrichtung (704-B) umfasst.

3. Verfahren nach Anspruch 2, wobei das MAC-CE oder der mit dem MAC-CE assoziierte MAC-Subheader ferner ein oder mehrere Informationsfelder umfasst, die Folgendes angeben:
eine oder mehrere Ressourcen, deren Verwendung für Sidelink-Übertragung von der zweiten drahtlosen Kommunikationsvorrichtung (704-B) bevorzugt wird; und/oder
eine oder mehrere Ressourcen, die eine Kollision erfahren.

4. Verfahren nach Anspruch 3, wobei die Sidelink-Übertragung Ressourcen verwendet, die von der zweiten drahtlosen Kommunikationsvorrichtung selbständig ausgewählt werden.

5. Verfahren nach Anspruch 3, wobei die eine oder die mehreren Ressourcen eine oder mehrere Zeitdomänenressourcen und/oder eine oder mehrere Frequenzdomänenressourcen und/oder ein oder mehrere Referenzsignale umfassen.

6. Verfahren nach einem der Ansprüche 3 bis 5, wobei das MAC-CE oder der mit dem MAC-CE assoziierte MAC-Subheader Informationen umfasst, die einen Typ oder einen Zweck des einen oder der mehreren Informationsfelder angeben.

7. Verfahren nach Anspruch 6, wobei der Typ oder Zweck zum Angeben einer oder mehrerer Ressourcen, deren Verwendung für autonome Sidelink-Übertragung von der zweiten drahtlosen Kommunikationsvorrichtung (704-B) bevorzugt wird, oder zum Angeben einer oder mehrerer Ressourcen, deren Verwendung für autonome Sidelink-Übertragung von der zweiten drahtlosen Kommunikationsvorrichtung (704-B) nicht bevorzugt wird, oder zum Angeben einer oder mehrerer Ressourcen ist, die eine Kollision erfahren.

8. Verfahren nach einem der Ansprüche 1 bis 7, wobei das MAC-CE und/oder der mit dem MAC-CE assoziierte MAC-Subheader Informationen zur Koordination von Ressourcen zwischen Vorrichtungen unter Verwendung von Sidelink-Übertragungen übertragen.

9. Verfahren nach einem der Ansprüche 1 bis 8, wobei der erkannte Auslöser eines ist von Folgendem ist:
• eine Ressourcenauswahl oder -neuauswahl wurde ausgelöst,
• eine gemessene Funkkanalqualität einer Verbindung ist unter eine konfigurierte Schwelle abgefallen,
• eine Änderung einer gemessenen Funkkanalqualität der Verbindung im Vergleich zu einer letzten Messung ist über einer konfigurierten Schwelle,
• ein Abstand zwischen der ersten und der zweiten drahtlosen Kommunikationsvorrichtung ist über einer konfigurierten Schwelle,
• ein Mobilitätszustand entweder der ersten oder der zweiten drahtlosen Kommunikationsvorrichtung hat sich geändert,
• eine gemessene Überlast oder Last für einen betroffenen Ressourcenpool ist über einer konfigurierten Schwelle,
• ein gemessenes Verhältnis von Negativbestätigungen, NACK, hybrider automatischer Wiederholungsanforderungen von Übertragungen auf der Verbindung ist über einer konfigurierten Schwelle,
• Messungen von mindestens einem von einem/einer Sidelink-Ressourcenblock, Sidelink-RB, Verkehr, Dienst, Logical Channel, LCH, Logical Channel Group, LCG, Anwendung auf der Verbindung geben an, dass QoS-Anforderungen des/der assoziierten RB/Verkehrs/Diensts/LCH/LCG/Anwendung nicht erfüllt werden,
• ein spezifischer Dienst/LCH weist verfügbare Daten auf oder ein Volumen verfügbarer Daten des spezifischen Diensts/LCH ist über einer konfigurierten Schwelle oder
• ein Empfang einer Anfrage von der zweiten drahtlosen Kommunikationsvorrichtung.

10. Erste drahtlose Kommunikationsvorrichtung (704-A), umfassend:
einen oder mehrere Sender (1308);
einen oder mehrere Empfänger (1310); und
Verarbeitungsschaltungsanordnung (1302), die mit dem einen oder den mehreren Sendern (1308) und dem einen oder den mehreren Empfängern (1310) assoziiert ist, wobei die Verarbeitungsschaltungsanordnung (1302) so konfiguriert ist, dass sie die erste drahtlose Kommunikationsvorrichtung (704-A) zum Durchführen des Verfahrens nach einem der Ansprüche 1 bis 9 veranlasst.

11. Verfahren, das von einer zweiten drahtlosen Kommunikationsvorrichtung (704-B) durchgeführt wird und Folgendes umfasst:
Empfangen (904) eines Medienzugriffssteuerungs-,MAC-,Steuerelements, CE, und/oder eines mit dem MAC-CE assoziierten MAC-Subheaders von einer ersten drahtlosen Kommunikationsvorrichtung (704-A); und Durchführen (912) von Ressourcenauswahl zum Auswählen einer oder mehrerer Ressourcen für Sidelink-Übertragung basierend auf Informationen, die in dem MAC-CE und/oder dem mit dem MAC-CE assoziierten MAC-Subheader, die von der ersten drahtlosen Kommunikationsvorrichtung (704-A) empfangen werden, umfasst sind, **dadurch gekennzeichnet, dass**
das MAC-CE oder der mit dem MAC-CE assoziierte MAC-Subheader ein oder mehrere Informationsfelder umfasst, die eine oder mehrere Ressourcen angeben, deren Verwendung für Sidelink-Übertragung von der zweiten drahtlosen Kommunikationsvorrichtung (704-B) nicht bevorzugt wird.

12. Verfahren nach Anspruch 11, wobei das MAC-CE oder der mit dem MAC-CE assoziierte MAC-Subheader ferner ein oder mehrere Informationsfelder umfasst, die Folgendes angeben:
eine oder mehrere Ressourcen, deren Verwendung für Sidelink-Übertragung von der zweiten drahtlosen Kommunikationsvorrichtung (704-B) bevorzugt wird; und/oder
eine oder mehrere Ressourcen, die eine Kollision erfahren.

13. Verfahren nach Anspruch 12, wobei das MAC-CE oder der mit dem MAC-CE assoziierte MAC-Subheader Informationen umfasst, die einen Typ oder einen Zweck des einen oder der mehreren Informationsfelder angeben.

14. Verfahren nach Anspruch 13, wobei der Typ oder Zweck zum Angeben einer oder mehrerer Ressourcen, deren Verwendung für Sidelink-Übertragung von der zweiten drahtlosen Kommunikationsvorrichtung (704-B) bevorzugt wird, oder zum Angeben einer oder mehrerer Ressourcen, deren Verwendung für autonome Sidelink-Übertragung von der zweiten drahtlosen Kommunikationsvorrichtung (704-B) nicht bevorzugt wird, oder zum Angeben einer oder mehrerer Ressourcen ist, die eine Kollision erfahren.

15. Zweite drahtlose Kommunikationsvorrichtung (704-B), umfassend:
einen oder mehrere Sender (1308);
einen oder mehrere Empfänger (1310); und
Verarbeitungsschaltungsanordnung (1302), die mit dem einen oder den mehreren Sendern (1308) und dem einen oder den mehreren Empfängern (1310) assoziiert ist, wobei die Verarbeitungsschaltungsanordnung (1302) so konfiguriert ist, dass sie die zweite drahtlose Kommunikationsvorrichtung (704-B) zum Durchführen des Verfahrens nach einem der Ansprüche 11 bis 14 veranlasst.

## Revendications

1. Procédé réalisé par un premier dispositif de communication sans fil (704-A), comprenant :
la détection (902) d'un déclenchement pour un élément de commande, CE, de commande d'accès au support, MAC, pour une communication de liaison latérale ; et
en réponse à la détection (902) du déclenchement, la transmission (904-5) du CE MAC et/ou d'un sous-en-tête MAC associé au CE MAC à un deuxième dispositif de communication sans fil (704-B), **caractérisé en ce que**
le CE MAC ou le sous-en-tête MAC associé au CE MAC comprend un ou plusieurs champs d'informations indiquant une ou plusieurs ressources dont l'utilisation par le deuxième dispositif de communication sans fil (704-B) n'est pas préférée pour une transmission de liaison latérale.

2. Procédé selon la revendication 1, dans lequel la transmission (904-5) du CE MAC et/ou du sous-en-tête MAC associé au deuxième dispositif de communication sans fil (704-B) comprend la transmission (904) du CE MAC au deuxième dispositif de communication sans fil (704-B).

3. Procédé selon la revendication 2, dans lequel le CE MAC ou le sous-en-tête MAC associé au CE MAC comprend en outre un ou plusieurs champs d'informations qui indiquent :
une ou plusieurs ressources dont l'utilisation par le deuxième dispositif de communication sans fil (704-B) est préférée pour une transmission de liaison latérale ; et/ou
une ou plusieurs ressources subissant une collision.

4. Procédé selon la revendication 3, dans lequel la transmission de liaison latérale utilise des ressources sélectionnées de manière autonome par le deuxième dispositif de communication sans fil.

5. Procédé selon la revendication 3, dans lequel les une ou plusieurs ressources comprennent une ou plusieurs ressources de domaine temporel, et/ou une ou plusieurs ressources de domaine fréquentiel, et/ou un ou plusieurs signaux de référence.

6. Procédé selon l'une quelconque des revendications 3 à 5, dans lequel le CE MAC ou le sous-en-tête MAC associé au CE MAC comprend des informations indiquant un type ou un objectif des un ou plusieurs champs d'informations.

7. Procédé selon la revendication 6, dans lequel le type ou l'objectif consiste à indiquer une ou plusieurs ressources dont l'utilisation par le deuxième dispositif de communication sans fil (704-B) est préférée pour une transmission de liaison latérale autonome, ou indiquer une ou plusieurs ressources dont l'utilisation par le deuxième dispositif de communication sans fil (704-B) n'est pas préférée pour une transmission de liaison latérale autonome, ou indiquer une ou plusieurs ressources subissant une collision.

8. Procédé selon l'une quelconque des revendications 1 à 7, dans lequel le CE MAC et/ou le sous-en-tête MAC associé au CE MAC portent des informations pour une coordination inter-dispositifs d'utilisation de ressources pour des transmissions de liaison latérale.

9. Procédé selon l'une quelconque des revendications 1 à 8, dans lequel le déclenchement détecté est l'un quelconque parmi :
• une sélection ou resélection de ressources a été déclenchée,
• une qualité de canal radio mesurée d'une connexion est devenue inférieure à un seuil configuré,
• un changement de qualité de canal radio mesurée de la connexion par rapport à une dernière mesure est supérieur à un seuil configuré,
• une distance entre les premier et deuxième dispositifs de communication sans fil est supérieure à un seuil configuré,
• un état de mobilité du premier ou deuxième dispositif de communication sans fil a changé,
• une congestion ou charge mesurée pour un groupe de ressources concernées est supérieure à un seuil configuré,
• un taux d'accusé de réception négatif, NACK, de demande de répétition automatique hybride, HARQ, mesuré de transmissions sur la connexion est supérieur à un seuil configuré,
• des mesures d'au moins l'un parmi un bloc de ressources, RB, un trafic, un service, un canal logique, LCH, un groupe de canaux logiques, LCG, et une application de liaison latérale sur la connexion indiquent que des exigences de QoS du RB/trafic/service/LCH/LCG/application associé ne sont pas remplies,
• un service/LCH spécifique présente des données disponibles ou un volume de données disponibles du service/LCH spécifique est supérieur à un seuil configuré, ou
• une réception d'une demande depuis le deuxième dispositif de communication sans fil.

10. Premier dispositif de communication sans fil (704-A) comprenant :
un ou plusieurs émetteurs (1308) ;
un ou plusieurs récepteurs (1310) ; et
une circuiterie de traitement (1302) associée aux un ou plusieurs émetteurs (1308) et aux un ou plusieurs récepteurs (1310), la circuiterie de traitement (1302) étant configurée pour amener le premier dispositif de communication sans fil (704-A) à réaliser le procédé selon l'une quelconque des revendications 1 à 9.

11. Procédé réalisé par un deuxième dispositif de communication sans fil (704-B), comprenant :
la réception (904) d'un élément de commande, CE, de commande d'accès au support, MAC, et/ou d'un sous-en-tête MAC associé au CE MAC depuis un premier dispositif de communication sans fil (704-A) ; et
la réalisation (912) d'une sélection de ressources pour sélectionner une ou plusieurs ressources pour une transmission de liaison latérale sur la base d'informations comprises dans le CE MAC et/ou le sous-en-tête MAC associé au CE MAC reçus depuis le premier dispositif de communication sans fil (704-A), **caractérisé en ce que**
le CE MAC ou le sous-en-tête MAC associé au CE MAC comprend un ou plusieurs champs d'informations indiquant une ou plusieurs ressources dont l'utilisation par le deuxième dispositif de communication sans fil (704-B) n'est pas préférée pour une transmission de liaison latérale.

12. Procédé selon la revendication 11, dans lequel le CE MAC ou le sous-en-tête MAC associé au CE MAC comprend en outre un ou plusieurs champs d'informations qui indiquent :
une ou plusieurs ressources dont l'utilisation par le deuxième dispositif de communication sans fil (704-B) est préférée pour une transmission de liaison latérale ; et/ou
une ou plusieurs ressources subissant une collision.

13. Procédé selon la revendication 12, dans lequel le CE MAC ou le sous-en-tête MAC associé au CE MAC comprend des informations indiquant un type ou un objectif des un ou plusieurs champs d'informations.

14. Procédé selon la revendication 13, dans lequel le type ou l'objectif consiste à indiquer une ou plusieurs ressources dont l'utilisation par le deuxième dispositif de communication sans fil (704-B) est préférée pour une transmission de liaison latérale autonome, ou indiquer une ou plusieurs ressources dont l'utilisation par le deuxième dispositif de communication sans fil (704-B) n'est pas préférée pour une transmission de liaison latérale autonome, ou indiquer une ou plusieurs ressources subissant une collision.

15. Deuxième dispositif de communication sans fil (704-B) comprenant :
un ou plusieurs émetteurs (1308) ;
un ou plusieurs récepteurs (1310) ; et
une circuiterie de traitement (1302) associée aux un ou plusieurs émetteurs (1308) et aux un ou plusieurs récepteurs (1310), la circuiterie de traitement (1302) étant configurée pour amener le deuxième dispositif de communication sans fil (704-B) à réaliser le procédé selon l'une quelconque des revendications 11 à 14.
